(19) Europäisches Patentamt
European Patent Office
Office européen des brevets

(11) **EP 4 708 983 A1**

(12) **EUROPEAN PATENT APPLICATION**
published in accordance with Art. 153(4) EPC

(43) Date of publication:
**11.03.2026 Bulletin 2026/11**

(21) Application number: **24806410.7**

(22) Date of filing: **07.05.2024**

(51) International Patent Classification (IPC):
*H04W 52/10* (2009.01)

(52) Cooperative Patent Classification (CPC):
**H04L 5/14; H04W 52/10; H04W 72/044;
H04W 72/0457; H04W 72/541**

(86) International application number:
**PCT/CN2024/091457**

(87) International publication number:
**WO 2024/235056 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.05.2023 CN 202310541448**

(71) Applicant: **Huawei Technologies Co., Ltd.
Shenzhen, Guangdong 518129 (CN)**

(72) Inventors:
• **HOU, Hailong**
**Shenzhen, Guangdong 518129 (CN)**
• **GUO, Zhiheng**
**Shenzhen, Guangdong 518129 (CN)**
• **LU, Shaozhong**
**Shenzhen, Guangdong 518129 (CN)**
• **SONG, Xinghua**
**Shenzhen, Guangdong 518129 (CN)**

(74) Representative: **Isarpatent
Patent- und Rechtsanwälte Partg mbB
Friedrichstraße 31
80801 München (DE)**

(54) **COMMUNICATION METHOD, DEVICE AND SYSTEM**

(57) This application relates to the field of wireless communication, and in particular, to a full-duplex scenario in a wireless communication system, and provides a communication method, apparatus, and system, to better implement power control when a terminal device performs an uplink transmission in the scenario, so as to ensure performance of the uplink transmission. The method may include: receiving first information, where the first information indicates a first open-loop power control parameter and a second open-loop power control parameter; determining a first power and a second power based on the first information, where the first open-loop power control parameter used for determining the first power is different from the second open-loop power control parameter used for determining the second power, the first power is a transmit power of a first PUSCH, the second power is a transmit power of a second PUSCH, a symbol occupied by the first PUSCH is an SBFD symbol, and a symbol occupied by the second PUSCH is a non-SBFD symbol; and sending the first PUSCH on a first BWP by using the first power, and sending the second PUSCH on the first BWP by using the second power.

Terminal device | Network device

S410: The terminal device receives first information from the network device

S420: The terminal device determines a first power and a second power based on the first information

S430: The terminal device sends a first PUSCH to the network device on a first BWP by using the first power, and sends a second PUSCH to the network device on the first BWP by using the second power

FIG. 4

## Description

This application claims priority to Chinese Patent Application No. 202310541448.3, filed with the China National Intellectual Property Administration on May 14, 2023 and entitled "COMMUNICATION METHOD, APPARATUS, AND SYSTEM", which is incorporated herein by reference in its entirety.

## TECHNICAL FIELD

Embodiments of this application relate to the communication field, and more specifically, to a communication method, apparatus, and system.

## BACKGROUND

In a wireless communication system, time division duplexing (Time Division Duplexing, TDD) is a primary communication mode. However, in a TDD system, most of time resources are occupied for a downlink (DL, downlink), resulting in coverage imbalance between the DL and an uplink (UL, uplink). The TDD system has poorer uplink coverage and higher uplink latency than a frequency division duplexing (Frequency Division Duplexing, FDD) system. To resolve a problem of uplink coverage and latency in the TDD system, subband full duplex (subband full duplex, SBFD) is proposed. In an SBFD scheme, sending and receiving may be performed simultaneously on one SBFD symbol. This leads to interference between the uplink and the downlink, resulting in higher interference intensity on an SBFD symbol than on a non-SBFD symbol. In this way, an uplink transmission performed by a terminal device on these symbols is affected. Therefore, how to perform better power control to ensure performance of the uplink transmission performed by the terminal device on the two types of symbols is a problem that needs to be resolved.

## SUMMARY

This application provides a communication method, apparatus, and system, to better implement power control when a terminal device performs an uplink transmission in an SBFD scenario, so as to ensure performance of the uplink transmission.

According to a first aspect, a communication method is provided. The method may be performed by a terminal device, or may be performed by a component (for example, a chip or a circuit) of the terminal device. This is not limited in this application. For ease of description, an example in which the method is performed by the terminal device is used below for description.

The method may include: receiving first information, where the first information indicates a first open-loop power control parameter and a second open-loop power control parameter; determining a first power and a second power based on the first information, where the first open-loop power control parameter used for determining the first power is different from the second open-loop power control parameter used for determining the second power, the first power is a transmit power of a first physical uplink shared channel PUSCH, the second power is a transmit power of a second PUSCH, a symbol occupied by the first PUSCH is a subband full duplex SBFD symbol, a symbol occupied by the second PUSCH is a non-SBFD symbol, the first open-loop power control parameter includes at least one of a first cell-specific target received power parameter, a first terminal device-specific target received power parameter, or a first pathloss compensation coefficient, and the second open-loop power control parameter includes at least one of a second cell-specific target received power parameter, a second terminal device-specific target received power parameter, or a second pathloss compensation coefficient; and sending the first PUSCH on a first bandwidth part BWP by using the first power, and sending the second PUSCH on the first bandwidth part BWP by using the second power.

According to the foregoing solution, when performing a transmission, the terminal device can select different open-loop power control parameters on the SBFD symbol and the non-SBFD symbol in different interference, to determine transmit powers of uplink transmissions on the two types of symbols, thereby ensuring performance of the uplink transmissions on the two types of symbols.

In a possible design, the first PUSCH and the second PUSCH are different parts of a same PUSCH transmission; the first PUSCH and the second PUSCH are PUSCH transmissions scheduled by different uplink scheduling grants; or the first PUSCH and the second PUSCH are different PUSCH transmissions in a repeated PUSCH transmission, or PUSCH transmissions in different slots in a PUSCH transmission across a plurality of slots, or different PUSCH transmissions in a plurality of PUSCH transmissions scheduled by a same uplink scheduling grant.

Regardless of whether the PUSCH is scheduled by a same uplink grant, and regardless of whether a repeated transmission is performed on the PUSCH, different power control parameters may be used, to ensure transmission performance of the terminal device on the two types of symbols.

In a possible design, the first PUSCH and the second PUSCH are random access message 3 PUSCHs or random access message A PUSCHs; the first cell-specific target received power parameter includes at least one of a first preamble target received power parameter, a first message 3 target received power offset parameter, or a first message A target received power offset parameter; and the second cell-specific target received power parameter includes at least one of a second preamble target received power parameter, a second message 3 target received power offset parameter, or a second message A target received power offset parameter; and the first cell-specific target received power parameter and the second cell-specific target received power parameter satisfy at least one of the following conditions:

the first preamble target received power parameter is different from the second preamble target received power parameter;

the first message 3 target received power offset parameter is different from the second message 3 target received power offset parameter; and

the first message A target received power offset parameter is different from the second message A target received power offset parameter.

According to the foregoing solution, for the PUSCH in a random access procedure, at least one of the foregoing three parameters is different, so that the terminal device can use different transmit powers on the two types of symbols, to better adapt to interference on the two types of symbols.

In a possible design, the first PUSCH and the second PUSCH are configured grant PUSCHs or dynamically scheduled PUSCHs; the first cell-specific target received power parameter is a cell-specific target received power parameter corresponding to a random access message 3 PUSCH or a random access message A PUSCH on an SBFD symbol; and the second cell-specific target received power parameter is a cell-specific target received power parameter corresponding to a random access message 3 PUSCH or a random access message A PUSCH on a non-SBFD symbol; and the cell-specific target received power parameter corresponding to the random access message 3 PUSCH or the random access message A PUSCH on the SBFD symbol is different from the cell-specific target received power parameter corresponding to the random access message 3 PUSCH or the random access message A PUSCH on the non-SBFD symbol.

According to the foregoing solution, for a configured grant PUSCH or a dynamically scheduled PUSCH, cell-specific target received power parameters are set to be different, so that the terminal device can use different transmit powers on the two types of symbols, to better adapt to interference on the two types of symbols.

In a possible design, the first PUSCH and the second PUSCH are the random access message 3 PUSCHs or the random access message A PUSCHs; the first terminal device-specific target received power parameter is greater than 0, and the second terminal device-specific target received power parameter is 0.

According to the foregoing solution, the terminal device uses a large power value on the SBFD symbol, to better adapt to interference on the SBFD symbol, and ensure transmission performance of the terminal device on the SBFD symbol.

In a possible design, the first PUSCH and the second PUSCH are PUSCHs scheduled by using first downlink control information DCI, and the first DCI includes an open-loop power control parameter set indication field; and that the first information indicates the first open-loop power control parameter and the second open-loop power control parameter includes: The first information indicates a first open-loop power control parameter set and a second open-loop power control parameter set; the first open-loop power control parameter and the second open-loop power control parameter belong to the first open-loop power control parameter set and the second open-loop power control parameter set; and when the open-loop power control parameter set indication field indicates that a candidate value set of the first terminal device-specific target received power parameter is the first open-loop power control parameter set, a candidate value set of the second terminal device-specific target received power parameter is the second open-loop power control parameter set; or when the open-loop power control parameter set indication field indicates that a candidate value set of the second terminal device-specific target received power parameter is the first open-loop power control parameter set, a candidate value set of the first terminal device-specific target received power parameter is the second open-loop power control parameter set.

In a possible design, the first PUSCH and the second PUSCH are PUSCHs scheduled by using first downlink control information DCI, and the first DCI includes an open-loop power control parameter set indication field; the first information includes a first open-loop power control parameter set and a second open-loop power control parameter set; and when the open-loop power control parameter set indication field indicates that a candidate value set of the first terminal device-specific target received power parameter is the first open-loop power control parameter set, a candidate value set of the second terminal device-specific target received power parameter is the second open-loop power control parameter set; or when the open-loop power control parameter set indication field indicates that a candidate value set of the second terminal device-specific target received power parameter is the first open-loop power control parameter set, a candidate value set of the first terminal device-specific target received power parameter is the second open-loop power control parameter set.

According to the foregoing solution, the terminal device may dynamically obtain power control parameters corresponding to the two types of symbols, and only one indication field is used in the DCI, so that signaling overheads are reduced.

In a possible design, the first PUSCH and the second PUSCH are PUSCHs scheduled by using first downlink control information DCI, and the first DCI includes an open-loop power control parameter set indication field; and that the first information indicates the first open-loop power control parameter and the second open-loop power control parameter includes: The first information indicates a first open-loop power control parameter set and a second open-loop power control parameter set; the first open-loop power control parameter and the second open-loop power control parameter belong to the first open-loop power control parameter set and the second open-loop power control parameter set; and when the open-loop power control parameter set indication field indicates that a candidate value set of the first terminal device-specific target received power parameter is the first open-loop power control parameter set, a candidate value set of the second terminal device-specific target received power parameter is the second open-loop power control parameter set; or when the open-loop power control parameter set indication field indicates that a candidate value set of the second terminal device-specific target received power parameter is the first open-loop power control parameter set, a candidate value set of the first terminal device-specific target received power parameter is the second open-loop power control parameter set.

In a possible design, the first PUSCH and the second PUSCH are PUSCHs scheduled by using first DCI, and the first DCI includes an open-loop power control parameter set indication field and a first indication field; the first information includes a first open-loop power control parameter set and a second open-loop power control parameter set; and the open-loop power control parameter set indication field indicates that a candidate value set of the first terminal device-specific target received power parameter is the first open-loop power control parameter set, and the first indication field indicates that a candidate value set of the second terminal device-specific target received power parameter is the second open-loop power control parameter set; or the open-loop power control parameter set indication field indicates that a candidate value set of the second terminal device-specific target received power parameter is the first open-loop power control parameter set, and the first indication field indicates that a candidate value set of the first terminal device-specific target received power parameter is the second open-loop power control parameter set.

The two indication fields more flexibly indicate the power control parameters corresponding to the two types of symbols for the terminal device, so that the terminal device performs power control.

In a possible design, the first PUSCH and the second PUSCH are PUSCHs scheduled by using first downlink control information DCI, and the first DCI includes a first sounding reference signal resource indicator SRI indication field and a second SRI indication field; and the first terminal device-specific target received power parameter is determined based on the first SRI indication field and a first mapping relationship, and the second terminal device-specific target received power parameter is determined based on the second SRI indication field and a second mapping relationship, where the first mapping relationship is a mapping relationship between a value of the first SRI indication field and a candidate value of the first terminal device-specific target received power parameter, and the second mapping relationship is a mapping relationship between a value of the second SRI indication field and a candidate value of the second terminal device-specific target received power parameter.

The two existing indication fields more flexibly indicate the power control parameters corresponding to the two types of symbols for the terminal device, so that the terminal device performs power control and signaling overheads are reduced.

In a possible design, a first power control adjustment state parameter for determining the first power is different from a second power control adjustment state parameter for determining the second power.

The power control adjustment state parameters are set to be different, so that the terminal device can use different transmit powers on the two types of symbols, to better adapt to interference on the two types of symbols.

In a possible design, the first power control adjustment state parameter and the second power control adjustment state parameter are predefined in a protocol, indicated by radio resource control RRC, indicated by dynamic signaling, or indicated by an SRI indication field in DCI.

In a possible design, second DCI is received, where the second DCI includes a first transmit power control TPC command and a second TPC command, the first TPC command indicates the first power control adjustment state parameter, and the second TPC command indicates the second power control adjustment state parameter.

The two indication fields flexibly indicate the power control parameters corresponding to the two types of symbols for the terminal device, so that the terminal device performs power control.

In a possible design, the first PUSCH and the second PUSCH are configured grant PUSCHs or dynamically scheduled PUSCHs, and the first information includes the first terminal device-specific target received power parameter and the second terminal device-specific target received power parameter.

Different power control parameters are configured for the two types of symbols, so that the terminal device uses different transmit powers on the two types of symbols, to better adapt to interference on the two types of symbols.

According to a second aspect, a communication method is provided. The method may be performed by a network device, or may be performed by a component (for example, a chip or a circuit) of the network device. This is not limited in this application. For ease of description, an example in which the method is performed by the network device is used below for description.

The method may include: sending first information, where the first information indicates a first open-loop power control parameter and a second open-loop power control parameter, the first open-loop power control parameter used for determining a first power is different from the second open-loop power control parameter used for determining a second power, the first power is a transmit power of a first physical uplink shared channel PUSCH, the second power is a transmit power of a second PUSCH, a symbol occupied by the first PUSCH is a subband full duplex SBFD symbol, a symbol occupied by the second PUSCH is a non-SBFD symbol, the first open-loop power control parameter includes at least one of a first cell-specific target received power parameter, a first terminal device-specific target received power parameter, or a first pathloss compensation coefficient, and the second open-loop power control parameter includes at least one of a second cell-specific target received power parameter, a second terminal device-specific target received power parameter, or a second pathloss compensation coefficient; and receiving the first PUSCH on a first BWP, and receiving the second PUSCH on the first BWP.

According to the foregoing solution, when performing a transmission, the terminal device can select different open-loop power control parameters on the SBFD symbol and the non-SBFD symbol in different interference, to determine transmit powers of uplink transmissions on the two types of symbols, thereby ensuring performance of the uplink transmissions on the two types of symbols.

In a possible design, the first PUSCH and the second PUSCH are different parts of a same PUSCH transmission; the first PUSCH and the second PUSCH are PUSCH transmissions scheduled by different uplink scheduling grants; or the first PUSCH and the second PUSCH are different PUSCH transmissions in a repeated PUSCH transmission, or PUSCH transmissions in different slots in a PUSCH transmission across a plurality of slots, or different PUSCH transmissions in a plurality of PUSCH transmissions scheduled by a same uplink scheduling grant.

Regardless of whether the PUSCH is scheduled by a same uplink grant, and regardless of whether a repeated transmission is performed on the PUSCH, different power control parameters may be used, to ensure transmission performance of the terminal device on the two types of symbols.

In a possible design, the first PUSCH and the second PUSCH are random access message 3 PUSCHs or random access message A PUSCHs; the first cell-specific target received power parameter includes at least one of a first preamble target received power parameter, a first message 3 target received power offset parameter, or a first message A target received power offset parameter; and the second cell-specific target received power parameter includes at least one of a second preamble target received power parameter, a second message 3 target received power offset parameter, or a second message A target received power offset parameter; and the first cell-specific target received power parameter and the second cell-specific target received power parameter satisfy at least one of the following conditions:

the first preamble target received power parameter is different from the second preamble target received power parameter;
the first message 3 target received power offset parameter is different from the second message 3 target received power offset parameter; and
the first message A target received power offset parameter is different from the second message A target received power offset parameter.

According to the foregoing solution, for the PUSCH in a random access procedure, at least one of the foregoing three parameters is different, so that the terminal device can use different transmit powers on the two types of symbols, to better adapt to interference on the two types of symbols.

In a possible design, the first PUSCH and the second PUSCH are configured grant PUSCHs or dynamically scheduled PUSCHs; the first cell-specific target received power parameter is a cell-specific target received power parameter corresponding to a random access message 3 PUSCH or a random access message A PUSCH on an SBFD symbol; and the second cell-specific target received power parameter is a cell-specific target received power parameter corresponding to a random access message 3 PUSCH or a random access message A PUSCH on a non-SBFD symbol; and the cell-specific target received power parameter corresponding to the random access message 3 PUSCH or the random access message A PUSCH on the SBFD symbol is different from the cell-specific target received power parameter corresponding to the random access message 3 PUSCH or the random access message A PUSCH on the non-SBFD symbol.

According to the foregoing solution, for a configured grant PUSCH or a dynamically scheduled PUSCH, cell-specific target received power parameters are set to be different, so that the terminal device can use different transmit powers on the two types of symbols, to better adapt to interference on the two types of symbols.

In a possible design, the first PUSCH and the second PUSCH are the random access message 3 PUSCHs or the random access message A PUSCHs; the first terminal device-specific target received power parameter is greater than 0, and the second terminal device-specific target received power parameter is 0.

According to the foregoing solution, the terminal device uses a large power value on the SBFD symbol, to better adapt to interference on the SBFD symbol, and ensure transmission performance of the terminal device on the SBFD symbol.

In a possible design, the first PUSCH and the second PUSCH are PUSCHs scheduled by using first downlink control information DCI, and the first DCI includes an open-loop power control parameter set indication field; and that the first information indicates the first open-loop power control parameter and the second open-loop power control parameter includes: The first information indicates a first open-loop power control parameter set and a second open-loop power control parameter set; the first open-loop power control parameter and the second open-loop power control parameter belong to the first open-loop power control parameter set and the second open-loop power control parameter set; and when the open-loop power control parameter set indication field indicates that a candidate value set of the first terminal device-specific target received power parameter is the first open-loop power control parameter set, a candidate value set of the second terminal device-specific target received power parameter is the second open-loop power control parameter set; or when the open-loop power control parameter set indication field indicates that a candidate value set of the second terminal device-specific target received power parameter is the first open-loop power control parameter set, a candidate value set of the first terminal device-specific target received power parameter is the second open-loop power control parameter set.

In a possible design, the first PUSCH and the second PUSCH are PUSCHs scheduled by using first downlink control information DCI, and the first DCI includes an open-loop power control parameter set indication field; the first information includes a first open-loop power control parameter set and a second open-loop power control parameter set; and when the open-loop power control parameter set indication field indicates that a candidate value set of the first terminal device-specific target received power parameter is the first open-loop power control parameter set, a candidate value set of the second terminal device-specific target received power parameter is the second open-loop power control parameter set; or when the open-loop power control parameter set indication field indicates that a candidate value set of the second terminal device-specific target received power parameter is the first open-loop power control parameter set, a candidate value set of the first terminal device-specific target received power parameter is the second open-loop power control parameter set.

According to the foregoing solution, the terminal device may dynamically obtain power control parameters corresponding to the two types of symbols, and only one indication field is used in the DCI, so that signaling overheads are reduced.

In a possible design, the first PUSCH and the second PUSCH are PUSCHs scheduled by using first downlink control information DCI, and the first DCI includes an open-loop power control parameter set indication field; and that the first information indicates the first open-loop power control parameter and the second open-loop power control parameter includes: The first information indicates a first open-loop power control parameter set and a second open-loop power control parameter set; the first open-loop power control parameter and the second open-loop power control parameter belong to the first open-loop power control parameter set and the second open-loop power control parameter set; and when the open-loop power control parameter set indication field indicates that a candidate value set of the first terminal device-specific target received power parameter is the first open-loop power control parameter set, a candidate value set of the second terminal device-specific target received power parameter is the second open-loop power control parameter set; or when the open-loop power control parameter set indication field indicates that a candidate value set of the second terminal device-specific target received power parameter is the first open-loop power control parameter set, a candidate value set of the first terminal device-specific target received power parameter is the second open-loop power control parameter set.

In a possible design, the first PUSCH and the second PUSCH are PUSCHs scheduled by using first DCI, and the first DCI includes an open-loop power control parameter set indication field and a first indication field; the first information includes a first open-loop power control parameter set and a second open-loop power control parameter set; and the open-loop power control parameter set indication field indicates that a candidate value set of the first terminal device-specific target received power parameter is the first open-loop power control parameter set, and the first indication field indicates that a candidate value set of the second terminal device-specific target received power parameter is the second open-loop power control parameter set; or the open-loop power control parameter set indication field indicates that a candidate value set of the second terminal device-specific target received power parameter is the first open-loop power control parameter set, and the first indication field indicates that a candidate value set of the first terminal device-specific target received power parameter is the second open-loop power control parameter set.

The two indication fields more flexibly indicate the power control parameters corresponding to the two types of symbols for the terminal device, so that the terminal device performs power control.

In a possible design, the first PUSCH and the second PUSCH are PUSCHs scheduled by using first downlink control information DCI, and the first DCI includes a first sounding reference signal resource indicator SRI indication field and a second SRI indication field; and the first SRI indication field and a first mapping relationship indicates the first terminal device-specific target received power parameter, and the second SRI indication field and a second mapping relationship indicates the second terminal device-specific target received power parameter, where the first mapping relationship is a mapping relationship between a value of the first SRI indication field and a candidate value of the first terminal device-specific target received power parameter, and the second mapping relationship is a mapping relationship between a value of the second SRI indication field and a candidate value of the second terminal device-specific target received power parameter.

The two existing indication fields more flexibly indicate the power control parameters corresponding to the two types of symbols for the terminal device, so that the terminal device performs power control and signaling overheads are reduced.

In a possible design, a first power control adjustment state parameter for determining the first power is different from a second power control adjustment state parameter for determining the second power.

The power control adjustment state parameters are set to be different, so that the terminal device can use different transmit powers on the two types of symbols, to better adapt to interference on the two types of symbols.

In a possible design, the first power control adjustment state parameter and the second power control adjustment state parameter are predefined in a protocol, indicated by radio resource control RRC, indicated by dynamic signaling, or indicated by an SRI indication field in DCI.

In a possible design, second DCI is sent, where the second DCI includes a first transmit power control TPC command and a second TPC command, the first TPC command indicates the first power control adjustment state parameter, and the second TPC command indicates the second power control adjustment state parameter.

The two indication fields flexibly indicate the power control parameters corresponding to the two types of symbols for the terminal device, so that the terminal device performs power control.

In a possible design, the first PUSCH and the second PUSCH are configured grant PUSCHs or dynamically scheduled PUSCHs, and the first information includes the first terminal device-specific target received power parameter and the second terminal device-specific target received power parameter.

Different power control parameters are configured for the two types of symbols, so that the terminal device uses different transmit powers on the two types of symbols, to better adapt to interference on the two types of symbols.

Correspondingly, this application further provides a communication device. The device may implement the communication method according to any one of the foregoing aspects. For example, the device may be a terminal device or a network device, or may be another device that can implement the foregoing communication methods. The device may implement the foregoing method by software, hardware, or hardware executing corresponding software.

In a possible design, the device may include a processor. The processor is configured to support the device in performing a corresponding function in the method according to any one of the foregoing aspects. In a possible design, the device may further include a memory. The memory is configured to be coupled to the processor, and stores program instructions and data that are necessary for the device. In a possible design, the device may further include a communication interface, configured to support communication between the device and another device. The communication interface may be a transceiver or a transceiver circuit.

According to another aspect, an embodiment of this application provides a communication system. The system includes the communication device according to the foregoing aspects.

According to still another aspect of this application, a computer-readable storage medium is provided. The computer-readable storage medium stores instructions. When the instructions are run on a computer, the computer is enabled to perform the methods according to the foregoing aspects.

According to still another aspect of this application, a computer program product including instructions is provided. When the computer program product runs on a computer, the computer is enabled to perform the methods according to the foregoing aspects.

This application further provides a chip system. The chip system includes a processor, configured to implement the method in any one of the foregoing aspects. In a possible design, the chip system may further include a memory, configured to implement the method in any one of the foregoing aspects.

Any device, computer storage medium, computer program product, chip system, or communication system provided above is configured to perform a corresponding method provided above. Therefore, for beneficial effects that can be achieved by the device, computer storage medium, computer program product, chip system, or communication system, refer to beneficial effects of corresponding solutions in the corresponding method provided above. Details are not described herein again.

## BRIEF DESCRIPTION OF DRAWINGS

FIG. 1 is a diagram of a network architecture according to an embodiment of this application;

FIG. 2 is a diagram of a TDD communication system according to an embodiment of this application;
FIG. 3 is a diagram of an SBFD communication system according to an embodiment of this application;
FIG. 4 is an interaction diagram of a communication method according to an embodiment of this application;
FIG. 5 is a diagram of a communication apparatus according to an embodiment of this application;
FIG. 6 is a diagram of another communication apparatus according to an embodiment of this application;
FIG. 7 is a diagram of still another communication apparatus according to an embodiment of this application; and
FIG. 8 is a diagram of a communication system according to an embodiment of this application.

## DESCRIPTION OF EMBODIMENTS

The following describes technical solutions of this application with reference to accompanying drawings.

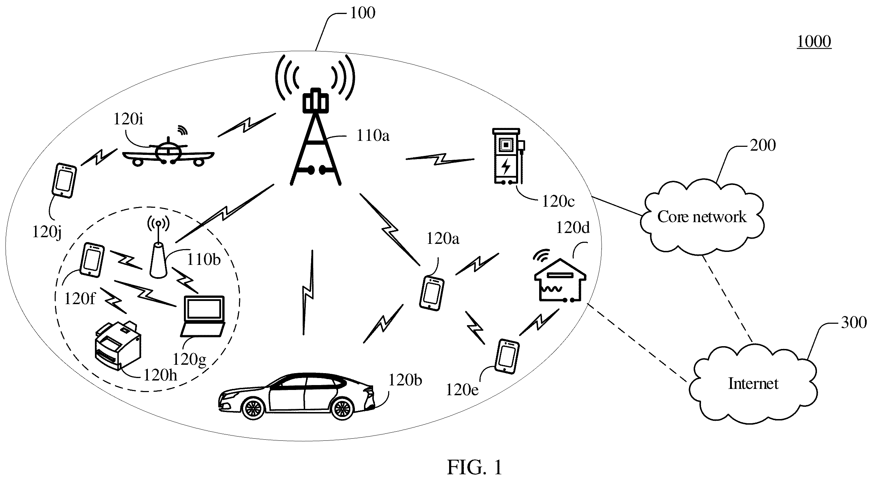

FIG. 1 is a diagram of a possible and non-limiting system. As shown in FIG. 1, a communication system 1000 includes a radio access network (radio access network, RAN) 100 and a core network (core network, CN) 200. The RAN 100 includes at least one RAN node (for example, 110a and 110b in FIG. 1, collectively referred to as 110) and at least one terminal (for example, 120a to 120j in FIG. 1, collectively referred to as 120). The RAN 100 may further include another RAN node, for example, a wireless relay device and/or a wireless backhaul device (not shown in FIG. 1). The terminal 120 is connected to the RAN node 110 in a wireless manner. The RAN node 110 is connected to the core network 200 in a wireless or wired manner. A core network device in the core network 200 and the RAN node 110 in the RAN 100 may be different physical devices respectively, or may be a same physical device that integrates a core network logical function and a radio access network logical function.

The RAN 100 may be a cellular system related to a 3rd generation partnership project (3rd generation partnership project, 3GPP), for example, a 4G or 5G mobile communication system or a future-oriented evolved system (for example, a 6G mobile communication system). Alternatively, the RAN 100 may be an open radio access network (open RAN, O-RAN or ORAN), a cloud radio access network (cloud radio access network, CRAN), or a wireless fidelity (wireless fidelity, Wi-Fi) system. Alternatively, the RAN 100 may be a communication system that integrates the foregoing two or more systems.

Alternatively, the RAN node 110 may be sometimes referred to as an access network device, a RAN entity, an access node, or the like, and forms a part of the communication system, to help the terminal implement radio access. A plurality of RAN nodes 110 in the communication system 1000 may be nodes of a same type, or may be nodes of different types. In some scenarios, roles of the RAN node 110 and the terminal 120 are relative to each other. For example, the network element 120i in FIG. 1 may be a helicopter or an uncrewed aerial vehicle, and may be configured as a mobile base station. For the terminal 120j that accesses the RAN 100 through the network element 120i, the network element 120i is a base station. However, for the base station 110a, the network element 120i is a terminal. Sometimes, the RAN node 110 and the terminal 120 are referred to as communication apparatuses. For example, the network elements 110a and 110b in FIG. 1 may be understood as communication apparatuses having a base station function, and the network elements 120a to 120j may be understood as communication apparatuses having a terminal function.

In a possible scenario, the RAN node may be a network device, a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, an access node in a Wi-Fi system, or the like. The RAN node may be a macro base station (for example, 110a in FIG. 1), a micro base station or an indoor station (for example, 110b in FIG. 1), a relay node or a donor node, or a radio controller in a CRAN scenario. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU).

In another possible scenario, the plurality of RAN nodes coordinate to assist the terminal in implementing radio access, and different RAN nodes separately implement some functions of the base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of the software module and the hardware module.

The terminal may also be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, automatic driving, telemedicine, a smart grid, smart furniture, a smart office, smart wearable, smart transportation, and a smart city. The terminal may be a mobile phone, a tablet computer, a computer having a wireless transceiver function, a wearable device, a vehicle, an uncrewed aerial vehicle, a helicopter, an airplane, a ship, a robot, a robot arm, a smart home device, or the like. A device form of the terminal is not limited in embodiments of this application.

The following first provides definitions of technical terms that may occur in embodiments of this application. Terms used in implementations of this application are merely used for explaining specific embodiments of this application, and are not intended to limit this application.

1. Full duplex

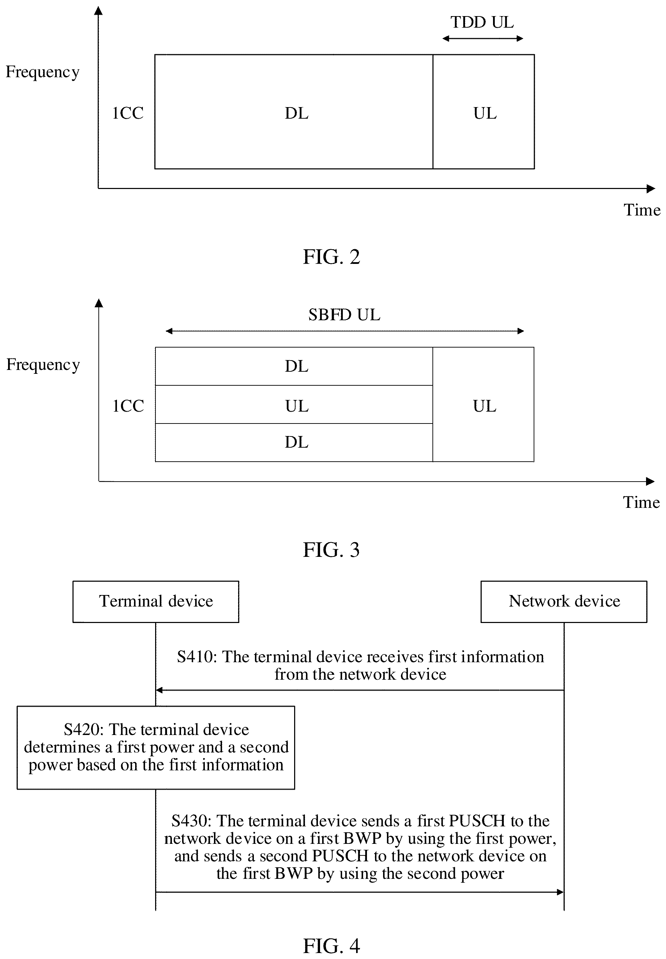

In a TDD system, as shown in FIG. 2, most of time resources are usually occupied for a downlink DL, and fewer time resources are occupied for an uplink UL. A direction of a symbol may be configured as uplink, downlink, or flexible. The direction of the symbol is configured for an entire component carrier (Component Carrier, CC). In a subband full duplex (subband full duplex, SBFD) scheme, one CC is divided into a plurality of subbands, and transmission directions of different subbands may be different, that is, some subbands are uplink subbands, and some subbands are downlink subbands. In this case, symbol directions of different subbands in one CC are different. A typical SBFD scheme is shown in FIG. 3: A middle subband is an uplink subband, and an upper subband and a lower subband are downlink subbands. In this way, in comparison with TDD, time resources used for UL transmissions are increased. In an SBFD scheme, sending and receiving may be performed simultaneously on one SBFD symbol. For example, as shown in FIG. 3, a symbol including a UL subband and a DL subband is an SBFD symbol. A normal symbol on which receiving and sending are not performed simultaneously may be a non-SBFD symbol. For example, as shown in FIG. 3, a symbol having only a UL subband is a non-SBFD symbol. Single frequency full duplex (single frequency full duplex, SFFD) means that simultaneous receiving and sending on one symbol can be implemented over the entire CC. In SBFD, different frequency domain resources (subbands) are used in uplink and downlink. In SFFD, same frequency domain resources are used in uplink and downlink.

2. Power control

A terminal device determines a transmit power of a sent physical uplink shared channel (physical uplink shared channel, PUSCH) based on a partial pathloss compensation mechanism. Specifically, if the terminal device sends a PUSCH on active uplink bandwidth part (bandwidth part, BWP) b of carrier f of serving cell c using parameter set configuration with index j and PUSCH power control adjustment state with index $l$, the terminal device determines the PUSCH transmit power $P_{\text{PUSCH},b,f,c}(i, j, q_d, l)$ on PUSCH transmission occasion i according to the following formula:

$$P_{\text{PUSCH},b,f,c}(i, j, q_d, l) =$$

$$min \left\{ \begin{array}{l} P_{\text{CMAX},f,c}(i), \\ P_{\text{O\_PUSCH},b,f,c}(j) + 10\,log_{10}(2^{\mu} \cdot M_{\text{RB},b,f,c}^{\text{PUSCH}}(i)) + \alpha_{b,f,c}(j) \cdot PL_{b,f,c}(q_d) + \Delta_{\text{TF},b,f,c}(i) + f_{b,f,c}(i,l) \end{array} \right\}$$

[dBm].

In the foregoing formula, $P_{\text{O\_PUSCH},b,f,c}(j)$ and $\alpha_{b,f,c}(j)$ are usually referred to as open-loop power control parameters, and are generally semi-statically configured by a network device through signaling, for example, radio resource control (radio resource control, RRC) signaling or a system information block (System information block, SIB). $f_{b,f,c}(i, l)$ is usually referred to as a closed-loop power control parameter, and is dynamically notified by the network device through signaling, for example, downlink control information (downlink control information, DCI).

The following describes meanings of the parameters in the foregoing formula in detail.

$P_{\text{CMAX},f,c}(i)$ is a maximum output power configured for the terminal device for carrier f of serving cell c on PUSCH transmission occasion i.

$P_{\text{O\_PUSCH},b,f,c}(j)$ is a PUSCH target received power configured by the network device on active uplink BWP b of carrier f of serving cell c, and the parameter is composed of a sum of $P_{\text{O\_NOMINAL,PUSCH},f,c}(j)$ and $P_{\text{O\_UE\_PUSCH},b,f,c}(j)$, where $j \in \{0,1, \ldots, J - 1\}$. Generally, $P_{\text{O\_NOMINAL,PUSCH},f,c}(j)$ is considered as a cell-specific parameter, and $P_{\text{O\_UE\_PUSCH},b,f,c}(j)$ is a terminal device-specific parameter.

Specifically, for a PUSCH transmission or retransmission corresponding to an uplink grant (UL grant) carried in a random access response (random access response, RAR), that is, a PUSCH carrying a message 3 (message 3, Msg3) in a random access procedure, $j = 0$, $P_{O\_UE\_PUSCH,b,f,c}(0) = 0$, and if the terminal device establishes a dedicated RRC connection by using a type-1 (Type-1) random access procedure, $P_{O\_NOMINAL,PUSCH,f,c}(0) = P_{O\_PRE} + \Delta_{PREAMBLE,Msg3}$, where $P_{O\_PRE}$ is a preamble (preamble) target received power that is in the type-1 random access procedure and that is configured by the network device, and $\Delta_{PREAMBLE,Msg3}$ is an offset that is of Msg3 target received power relative to the preamble target received power and that is configured by the network device or predefined. If the terminal device establishes a dedicated RRC connection by using a type-2 (Type-2) random access procedure, $P_{O\_NOMINAL,PUSCH,f,c}(0) = P_{O\_PRE} + \Delta_{MsgA\_PUSCH}$, where $P_{O\_PRE}$ is a message A (message A, MsgA) preamble target received power that is in the type-2 random access procedure and that is configured by the network device, and $\Delta_{MsgA\_PUSCH}$ is an offset that is of a MsgA PUSCH target received power relative to the MsgA preamble target received power and that is configured by the network device or predefined. The message 3 may also be understood as a 1st scheduling transmission in a random access procedure, and the message A may be understood as a preamble and load transmission in a two-step random access procedure.

For a PUSCH transmission or retransmission of a configured grant (configured grant) type, $j = 1$. The network device may configure a value of $P_{O\_NOMINAL,PUSCH,f,c}(1)$ through higher layer signaling p0-NominalWithoutGrant. If the value is not configured, $P_{O\_NOMINAL,PUSCH,f,c}(1) = P_{O\_NOMINAL,PUSCH,f,c}(0)$. $P_{O\_UE\_PUSCH,b,f,c}(1)$ is configured by the network device through signaling.

For another PUSCH, for example, a PUSCH dynamically scheduled by using the DCI, $j \in \{2, ... , J - 1\} = S_J$. $J$ is a positive integer greater than or equal to 2. A value of $P_{O\_NOMINAL,PUSCH,f,c}(j)$ is applicable for all $j \in S_J$. The network device may configure a value of $P_{O\_NOMINAL,PUSCH,f,c}(1)$ through higher layer signaling p0-NominalWithGrant. If the value is not configured, $P_{O\_NOMINAL,PUSCH,f,c}(j) = P_{O\_NOMINAL,PUSCH,f,c}(0)$. For $P_{O\_UE\_PUSCH,b,f,c}(j)$, for active UL BWP b of carrier f of serving cell c, the network device may configure a set of $P_{O\_UE\_PUSCH}$ values by configuring a set of PO-PUSCH-AlphaSet, where one $P_{O\_UE\_PUSCH}$ value and one $\alpha_{b,f,c}(j)$ value may be configured in each PO-PUSCH-AlphaSet.

Further, the network device enables, by using a signaling notification or a predefined rule, the terminal device to determine to use one of the $P_{O\_UE\_PUSCH}$ values.

The network device indicates, by using a sounding reference signal resource indicator (sounding reference signal resource indicator, SRI) field in the DCI, a value of $P_{O\_UE\_PUSCH,b,f,c}(j)$ used by the terminal device. Specifically, the network device may configure a mapping between the SRI and the set of PO-PUSCH-AlphaSet through higher layer signaling sri-PUSCH-MappingToAddModList. The signaling sri-PUSCH-MappingToAddModList includes a plurality of SRI-PUSCH-PowerControl, one SRI-PUSCH-PowerControl may be associated with one PO-PUSCH-AlphaSet, and an index of one SRI-PUSCH-PowerControl corresponds to one value of the SRI field.

Therefore, if one piece of DCI for scheduling a PUSCH transmission includes an SRI field, the terminal device may obtain, from sri-PUSCH-PowerControlId in the higher layer signaling SRI-PUSCH-PowerControl, a mapping relationship between a set of values for the SRI field in the DCI and values of P0-PUSCH-AlphaSetId corresponding to a set of P0-PUSCH-AlphaSet values, and then the terminal device may determine, by using the SRI value, values of

$P_{O\_UE\_PUSCH,b,f,c}(j)$ and $\alpha_{b,f,c}(j)$ that are associated with or corresponding to the SRI value. $M_{RB,b,f,c}^{PUSCH}(i)$ is a bandwidth of PUSCH resource assignment for PUSCH transmission occasion i on active UL BWP b of carrier f of serving cell c.

$\alpha_{b,f,c}(j)$ is a pathloss compensation coefficient, $\alpha_{b,f,c}(j)$ is generally used together with $P_{O\_UE\_PUSCH,b,f,c}(j)$. For a value of $\alpha_{b,f,c}(j)$, refer to a process of determining $P_{O\_UE\_PUSCH,b,f,c}(j)$.

$PL_{b,f,c}(q_d)$ is a downlink pathloss estimate (dB) calculated by the terminal device using a reference signal (reference signal, RS) with index $q_d$. The reference signal herein may be a channel state information reference signal (channel state information reference signal, CSI-RS) or a synchronization signal block (synchronization signal block, SSB) sent by the network device.

$\Delta_{TF,b,f,c}(i)$ is a power offset determined based on different modulation and coding scheme (modulation and coding scheme, MCS) levels.

$f_{b,f,c}(i, l)$ is a power control adjustment state and is determined through two approaches: an absolute formula and an accumulated formula.

Accumulated formula: $f_{b,f,c}(i, l) = f_{b,f,c}(i - i_0, l) + \sum_{m=0}^{C(D_i)-1} \delta_{PUSCH,b,f,c}(m, l)$.

Absolute formula: $f_{b,f,c}(i, l) = \delta_{PUSCH,b,f,c}(i, l)$.

$\delta_{PUSCH,b,f,c}$ is a transmit power control (Transmit power control, TPC) command delivered by the network device, and the TPC command may be delivered by using the DCI for scheduling a PUSCH or DCI for scrambling a cyclic redundancy check (Cyclic redundancy check, CRC) by using a TPC-PUSCH-radio network temporary identifier (radio network temporary identifier, RNTI).

In an SBFD scenario, open-loop or closed-loop power control parameters used for an uplink channel or signal on an SBFD symbol and an uplink channel or signal on a non-SBFD symbol are the same. As a result, transmit powers of the uplink channels or signals on the two types of symbols are the same. However, cross-link interference is present in SBFD symbols but absent in non-SBFD symbols, resulting in higher interference intensity on the SBFD symbol than on the non-SBFD symbol. As a result, link quality on the SBFD symbol is worse than link quality on the non-SBFD symbol, and performance of an uplink channel or signal transmitted on the SBFD symbol is poorer than that on the non-SBFD symbol.

To resolve the foregoing problem, an embodiment of this application provides a communication method. Different power control parameters are used for a transmission on an SBFD symbol and a transmission on a non-SBFD symbol, so that a terminal device can use an appropriate transmit power when performing uplink transmissions on the two types of symbols, and transmission performance of transmissions performed by the terminal device on the two types of symbols is consistent.

FIG. 4 is a diagram of an example of a communication method according to an embodiment of this application. The method may be performed by a terminal device and a network device, or may be performed by a chip in the terminal device and a chip in the network device. It should be understood that FIG. 4 shows steps or operations in the communication method. However, these steps or operations are merely examples. In this embodiment of this application, other operations or variations of the operations in FIG. 4 may be further performed, or appropriate exchanging between steps may be performed.

S410: The terminal device receives first information from the network device.

Correspondingly, the network device sends the first information to the terminal device.

The first information indicates a first open-loop power control parameter and a second open-loop power control parameter.

S420: The terminal device determines a first power and a second power based on the first information.

Correspondingly, the network device determines the first information based on a requirement of the terminal device for the first power and the second power.

The first power is a transmit power of a first PUSCH, and the second power is a transmit power of a second PUSCH. A symbol occupied by the first PUSCH is a subband full duplex SBFD symbol, and a symbol occupied by the second PUSCH is a non-SBFD symbol, an uplink symbol, or a flexible symbol.

Parameters used for determining the first power and the second power satisfy at least one of the following conditions:

the first open-loop power control parameter used for determining the first power is different from the second open-loop power control parameter used for determining the second power; and

a first closed-loop power control parameter used for determining the first power is different from a second closed-loop power control parameter used for determining the second power.

It should be understood that the parameters used for determining the first power and the second power herein are different. In a possible understanding manner, the parameters used for determining the first power and the second power are configured independently, that is, there are two parameters or two sets of parameters. The two parameters or the two sets of parameters are set for two types of PUSCHs, so that the network device independently configures power control parameters for PUSCHs of different symbols based on actual conditions. In this case, there is no limit on whether values of the two sets of parameters are the same or different. In another possible understanding manner, values of parameters for determining the first power and the second power are different. Due to different interference on the two types of symbols, the network device sets different parameter values, to help set different transmit powers, so that final receiving performance is consistent.

In this application, that the two parameters are different may also be understood as that at least one sub-parameter included in the two parameters varies.

S430: The terminal device sends the first PUSCH to the network device on a first BWP by using the first power, and sends the second PUSCH to the network device on the first BWP by using the second power.

Correspondingly, the network device receives the first PUSCH and the second PUSCH on the first BWP.

A relationship between the first PUSCH and the second PUSCH may be in the following possible manners.

Manner 1: The first PUSCH and the second PUSCH are different parts of a same PUSCH transmission. For example, in a time domain resource of a single PUSCH transmission, some symbols are SBFD symbols, where a PUSCH on the SBFD symbol is referred to as the first PUSCH; and other symbols are non-SBFD symbols, where a PUSCH on the non-SBFD symbol is referred to as the second PUSCH.

Manner 2: The first PUSCH and the second PUSCH are PUSCH transmissions scheduled by different uplink scheduling grants. For example, the first PUSCH and the second PUSCH are dynamically scheduled by using a plurality of pieces of independent DCI. For another example, the first PUSCH and the first PUSCH are scheduled by a plurality of independent configured grants. For another example, the first PUSCH is dynamically scheduled by using the DCI, and the second PUSCH is scheduled by a configured grant; or vice versa. A time domain resource of the first PUSCH is an SBFD symbol, and a time domain resource of the second PUSCH is a non-SBFD symbol.

Manner 3: The first PUSCH and the second PUSCH are different transmissions in a repeated PUSCH transmission. Alternatively, the first PUSCH and the second PUSCH are PUSCH transmissions in different slots in a PUSCH transmission across a plurality of slots. For example, a PUSCH is configured or scheduled for a plurality of repeated transmissions. In this case, the first PUSCH is a PUSCH transmission that occupies an SBFD symbol in the plurality of repeated transmissions, and the second PUSCH is a PUSCH transmission that occupies a non-SBFD symbol in the plurality of repeated transmissions. For another example, a PUSCH is configured or scheduled for a plurality of repeated transmissions, and the plurality of repeated transmissions are in different slots. In this case, the first PUSCH is a PUSCH transmission that occupies an SBFD symbol in the plurality of repeated transmissions, and the second PUSCH is a PUSCH transmission that occupies a non-SBFD symbol in the plurality of repeated transmissions. The PUSCH repeated transmission is a type (Type) A PUSCH repeated transmission or a type B PUSCH repeated transmission.

Manner 4: The first PUSCH and the second PUSCH are different PUSCH transmissions in a plurality of PUSCH transmissions scheduled by a same uplink scheduling grant. For example, the first PUSCH and the second PUSCH are a plurality of PUSCH transmissions scheduled by using one piece of DCI. For another example, the first PUSCH and the second PUSCH are a plurality of PUSCH transmissions scheduled by one configured grant.

In a possible implementation, an open-loop power control parameter includes at least one of a cell-specific target received power parameter, a terminal device-specific target received power parameter, or a pathloss compensation coefficient. For example, the first open-loop power control parameter includes at least one of a first cell-specific target received power parameter, a first terminal device-specific target received power parameter, or a first pathloss compensation coefficient; and the second open-loop power control parameter includes at least one of a second cell-specific target received power parameter, a second terminal device-specific target received power parameter, or a second pathloss compensation coefficient. In the following, there are a plurality of implementations for a parameter included in the open-loop power control parameter.

Implementation 1: The open-loop power control parameter includes the cell-specific target received power parameter. It should be understood that, the open-loop power control parameter is not limited herein to include another parameter. For example, the cell-specific target received power parameter is $P_{O\_NOMINAL,PUSCH,f,c}(1)$, $P_{O\_NOMINAL,PUSCH,f,c}(0)$, or $P_{O\_NOMINAL,PUSCH,f,c}(j)$, $j \in \{0,1,...,J-1\}$. $J$ is a positive integer. In a possible manner, the first cell-specific target received power parameter for determining the first power is different from the second cell-specific target received power parameter for determining the second power. For example, if different values of $P_{O\_NOMINAL,PUSCH,f,c}(j)$ are used for the first PUSCH and the second PUSCH, it means that for active UL BWP $b$ of carrier f of serving cell c, for a same $j$, different values of $P_{O\_NOMINAL,PUSCH}$ are used for PUSCH transmissions on the SBFD symbol and the non-SBFD symbol.

Implementation 2: The open-loop power control parameter includes the terminal device-specific target received power parameter. It should be understood that the terminal device-specific target received power parameter indicates that the power parameter is a terminal device-level parameter. It may also be understood as that, for different terminal devices in a same cell, the parameter may be the same or may be different. For example, the terminal device-specific target received power parameter is $P_{O\_UE\_PUSCH,b,f,c}(j)$. $j \in \{0,1,...,J-1\}$. $J$ is a positive integer. In a possible manner, the first terminal device-specific target received power parameter for determining the first power is different from the second terminal device-specific target received power parameter for determining the second power. For example, if different values of $P_{O\_UE\_PUSCH,b,f,c}(j)$ are used for the first PUSCH and the second PUSCH, it means that for active UL BWP $b$ of carrier f of serving cell c, for a same $j$, different values of $P_{O\_UE\_PUSCH,b,f,c}(j)$ are used for PUSCH transmissions on the SBFD symbol and the non-SBFD symbol.

Implementation 3: The open-loop power control parameter includes the pathloss compensation coefficient. For example, the pathloss compensation coefficient is $\alpha_{b,f,c}(j)$. $j \in \{0,1,...,J-1\}$. $J$ is a positive integer. In a possible manner, the first pathloss compensation coefficient for determining the first power is different from a pathloss compensation coefficient for determining the second power. For example, if different values of $\alpha_{b,f,c}(j)$ are used for the first PUSCH and the second PUSCH, it means that for active UL BWP $b$ of carrier f of serving cell c, for a same $j$, different values of $\alpha_{b,f,c}(j)$ are used for PUSCH transmissions on the SBFD symbol and the non-SBFD symbol.

It should be understood that the foregoing implementations may be combined with each other. For example, the open-loop power control parameter may include the terminal device-specific target received power parameter and the pathloss compensation coefficient. The terminal device-specific target received power parameter and the pathloss compensation coefficient of the first PUSCH may be different from those of the second PUSCH, or one of the terminal device-specific target received power parameter and the pathloss compensation coefficient of the first PUSCH is different from that of the second PUSCH. This is not limited in this application.

Based on a scheduling type of a PUSCH or a type of data carried in the PUSCH, there are the following several possible cases for the PUSCH.

Case 1: The first PUSCH and the second PUSCH are random access message 3 PUSCHs or random access message A PUSCHs. The PUSCH herein may be initially transmitted or retransmitted.

Case 2: The first PUSCH and the second PUSCH are configured grant PUSCHs.

Case 3: The first PUSCH and the second PUSCH are PUSCHs other than those in the foregoing two implementations, for example, dynamically scheduled PUSCHs.

For the foregoing three cases, the PUSCH may be initially transmitted or retransmitted. This is not limited in this application.

For a scenario in which the open-loop power control parameter includes the cell-specific target received power parameter, there may be a plurality of implementations based on the foregoing three cases for the PUSCH.

In a case in which the first PUSCH and the second PUSCH are the random access message 3 PUSCHs or the random access message A PUSCHs, the cell-specific target received power parameter may include at least one of a preamble target received power parameter, a message 3 target received power offset parameter, or a MsgA target received power offset parameter.

For example, the first cell-specific target received power parameter includes at least one of a first preamble target received power parameter, a first message 3 target received power offset parameter, or a first MsgA target received power offset parameter; and the second cell-specific target received power parameter includes at least one of a second preamble target received power parameter, a second message 3 target received power offset parameter, or a second MsgA target received power offset parameter. For another example, the preamble target received power parameter is $P_{O\_PRE}$. For another example, the message 3 target received power offset parameter is $\Delta_{PREAMBLE,Msg3}$. For another example, the MsgA target received power offset parameter is $\Delta_{MsgA\_PUSCH}$.

That the first cell-specific target received power parameter is different from the second cell-specific target received power parameter may be understood as that the first cell-specific target received power parameter and the second cell-specific target received power parameter satisfy at least one of the following conditions:

the first preamble target received power parameter is different from the second preamble target received power parameter;

the first message 3 target received power offset parameter is different from the second message 3 target received power offset parameter; and

the first message A target received power offset parameter is different from the second message A target received power offset parameter.

Specifically, there may be the following plurality of implementations.

Implementation 1: Message 3 target received power offset parameters or MsgA target received power offset parameters used for the first PUSCH and the second PUSCH are different. For example, two different values of $\Delta_{PREAMBLE,Msg3}$ or $\Delta_{MsgA\_PUSCH}$ are configured by the network device or predefined, and are respectively used for the first PUSCH and the second PUSCH. For another example, an existing $\Delta_{PREAMBLE,Msg3}$ or $\Delta_{MsgA\_PUSCH}$ is used for a PUSCH on the non-SBFD symbol, and a new $\Delta_{PREAMBLE,Msg3}$ or $\Delta_{MsgA\_PUSCH}$ is introduced for a PUSCH on the SBFD symbol; or vice versa. In this way, the network device configures two power parameters, so that different powers are used for transmissions on the SBFD symbol and the non-SBFD symbol. For another example, a $\Delta_{PREAMBLE,Msg3}$ or a $\Delta_{MsgA\_PUSCH}$ may be configured by the network device or predefined for the first PUSCH, and a relative value of $\Delta_{PREAMBLE,Msg3}$ or $\Delta_{MsgA\_PUSCH}$ is configured for the second PUSCH; or vice versa. In this way, the network device may configure an absolute value, and then configure a relative value to indicate power parameters on different symbols.

For example, if the terminal device establishes a dedicated RRC connection by using a type-1 random access procedure, for the second PUSCH, the second cell-specific target received power parameter $P_{O\_NOMINAL,PUSCH,f,c}(0)$, = $P_{O\_PRE} + \Delta_{PREAMBLE,Msg3\ for\ NonSBFD}$, and for the first PUSCH, the first cell-specific target received power parameter $P_{O\_NOMINAL,PUSCH,f,c}(0)$, = $P_{O\_PRE} + \Delta_{PREAMBLE,Msg3\ for\ SBFD}$. $\Delta_{PREAMBLE,Msg3\ for\ NonSBFD}$ is the second message 3 target received power offset parameter, and $\Delta_{PREAMBLE,Msg3\ for\ SBFD}$ is the first message 3 target received power offset parameter.

For another example, if the terminal device establishes a dedicated RRC connection by using a type-2 random access procedure, for the second PUSCH, the second cell-specific target received power parameter $P_{O\_NOMINAL,PUSCH,f,c}(0)$, = $P_{O\_PRE} + \Delta_{MsgAPUSCH\_NonSBFD}$, and for the first PUSCH, the first cell-specific target received power parameter $P_{O\_NOMINAL,PUSCH,f,c}(0)$, = $P_{O\_PRE} + \Delta_{MsgAPUSCH\_SBFD}$. $\Delta_{MsgAPUSCH\_NonSBFD}$ is the second MsgA target received power offset parameter, and $\Delta_{MsgAPUSCH\_SBFD}$ is the first MsgA target received power offset parameter.

Implementation 2: Preamble target received power parameters used for the first PUSCH and the second PUSCH are different. For example, two different values of $P_{O\_PRE}$ are configured by the network device or predefined, and are respectively used for the first PUSCH and the second PUSCH. In this way, the network device configures two power parameters, so that preamble target received powers for transmissions on the SBFD symbol and the non-SBFD symbol are different. For another example, an existing $P_{O\_PRE}$ is used for a PUSCH on the non-SBFD symbol, and a new $P_{O\_PRE}$ is introduced for a PUSCH on the SBFD symbol; or vice versa. For another example, a $P_{O\_PRE}$ may be configured by the network device or predefined for the first PUSCH, and a relative value of $P_{O\_PRE}$ is configured for the second PUSCH; or vice versa. In this way, the network device may configure an absolute value, and then configure a relative value to indicate power parameters on different symbols. It should be noted that, in Implementation 2, different preamble target received power parameters may be implemented independently of this solution. In other words, for a same random access preamble, target received power parameters may differ for a transmission on the SBFD symbol and a transmission on the non-SBFD symbol.

In addition, the foregoing two implementations may alternatively be combined. For example, the preamble target received power parameters used for the first PUSCH and the second PUSCH are different, and the message 3 target received power offset parameters used for the first PUSCH and the second PUSCH are different. In this case, two sets of power parameters, or one set of absolute values and one set of relative values may be configured by the network device or predefined to indicate a plurality of different parameters.

For a case in which the first PUSCH and the second PUSCH are configured grant PUSCHs, there are the following possible implementations. In this case, the first cell-specific target received power parameter may be different from the second cell-specific target received power parameter. For example, two different cell-specific target received power parameters are configured by the network device or predefined. In this case, the cell-specific target received power parameter may be $P_{O\_NOMINAL,PUSCH,f,c}(1)$. For example, when the network device configures a value of $P_{O\_NOMINAL,PUSCH,f,c}(1)$ through the higher layer signaling, two values may be configured for transmissions of the first PUSCH and the second PUSCH respectively. For another example, a value of $P_{O\_NOMINAL,PUSCH,f,c}(1)$ is determined based on $P_{O\_NOMINAL,PUSCH}(0)$, and $P_{O\_NOMINAL,PUSCH}(0)$ is $P_{O\_NOMINAL,PUSCH}$ corresponding to the message 3 PUSCH or the MsgA PUSCH. For a value of $P_{O\_NOMINAL,PUSCH}(0)$, refer to the scenario in which the first PUSCH and the second PUSCH are the random access message 3 PUSCHs or the random access message A PUSCHs. For example, the first cell-specific target received power parameter is $P_{O\_NOMINAL,PUSCH,f,c\ for\ SBFD}(1) = P_{O\_NOMINAL,PUSCH,f,c\ for\ SBFD}(0)$; and the second cell-specific target received power parameter is $P_{O\_NOMINAL,PUSCH,f,c\ for\ NonSBFD}(1) = P_{O\_NOMINAL,PUSCH,f,c\ for\ NonSBFD}(0)$. $P_{O\_NOMINAL,PUSCH,f,c\ for\ SBFD}(0)$ is a first cell-specific target received power parameter in a scenario in which the first PUSCH is a random access message 3 PUSCH or a random access message A PUSCH; and $P_{O\_NOMINAL,PUSCH,f,c\ for\ NonSBFD}(0)$ is a second cell-specific target received power parameter in a scenario in which the second PUSCH is a random access message 3 PUSCH or a random access message A PUSCH.

For a case in which the first PUSCH and the second PUSCH are PUSCHs other than those described in the foregoing two implementations, there are the following possible implementations. In this case, the first cell-specific target received power parameter may be different from the second cell-specific target received power parameter. For example, two different cell-specific target received power parameters are configured by the network device or predefined. In this case, the cell-specific target received power parameter may be $P_{O\_NOMINAL,PUSCH,f,c}(j)$. $j \in \{0,1, \dots, J-1\}$. $J$ is a positive integer. For example, when the network device configures a value of $P_{O\_NOMINAL,PUSCH,f,c}(j)$ through the higher layer signaling, two values may be configured for transmissions of the first PUSCH and the second PUSCH respectively. For another example, a value of $P_{O\_NOMINAL,PUSCH,f,c}(j)$ is determined based on $P_{O\_NOMINAL,PUSCH}(0)$, and $P_{O\_NOMINAL,PUSCH}(0)$ is $P_{O\_NOMINAL,PUSCH}$ corresponding to the message 3 PUSCH or the MsgA PUSCH. For a value of $P_{O\_NOMINAL,PUSCH}(0)$, refer to the scenario in which the first PUSCH and the second PUSCH are the random access message 3 PUSCHs or the random access message A PUSCHs. For example, the first cell-specific target received power parameter is $P_{O\_NOMINAL,PUSCH,f,c\ for\ SBFD}(j) = P_{O\_NOMINAL,PUSCH,f,c\ for\ SBFD}(0)$; and the second cell-specific target received power parameter is $P_{O\_NOMINAL,PUSCH,f,c\ for\ NonSBFD}(j) = P_{O\_NOMINAL,PUSCH,f,c\ for\ NonSBFD}(0)$. $P_{O\_NOMINAL,PUSCH,f,c\ for\ SBFD}(0)$ is a first cell-specific target received power parameter in a scenario in which the first PUSCH is a random access message 3 PUSCH or a random access message A PUSCH; and $P_{O\_NOMINAL,PUSCH,f,c\ for\ NonSBFD}(0)$ is a second cell-specific target received power parameter in a scenario in which the second PUSCH is a random access message 3 PUSCH or a random access message A PUSCH.

For a scenario in which the open-loop power control parameter includes the terminal device-specific target received power parameter, there may be a plurality of implementations based on the foregoing three cases for the PUSCH.

A case in which the first PUSCH and the second PUSCH are the random access message 3 PUSCHs or the random access message A PUSCHs is analyzed as follows. In this case, the first terminal device-specific target received power parameter may be different from the second terminal device-specific target received power parameter. For example, the first terminal device-specific target received power parameter is greater than 0, and the second terminal device-specific target received power parameter is 0. For example, for a PUSCH on the non-SBFD symbol, a value of $P_{O\_UE\_PUSCH,b,f,c}(0)$ is 0. For a PUSCH on the SBFD symbol, a value of $P_{O\_UE\_PUSCH,b,f,c}(0)$ may be greater than 0, and the value may be predefined, or may be notified by the network device through signaling.

A case in which the first PUSCH and the second PUSCH are configured grant PUSCHs or dynamically scheduled PUSCHs is analyzed as follows. In this case, the first terminal device-specific target received power parameter may be different from the second terminal device-specific target received power parameter. The network device may configure two terminal device-specific target received power parameters for the terminal device for power control on the two types of symbols. For example, the first information sent by the network device includes the first terminal device-specific target received power parameter and the second terminal device-specific target received power parameter. For another example, two values of $P_{O\_UE\_PUSCH,b,f,c}(1)$ configured by the network device are respectively used for the first PUSCH and the second PUSCH. It should be understood that the two values of $P_{O\_UE\_PUSCH,b,f,c}(1)$ herein are for a single transmission reception point (transmission reception point, TRP) scenario. In a multi-TRP scenario, two values of $P_{O\_UE\_PUSCH,b,f,c}(1)$ may be independently configured for each TRP, and are respectively used for the first PUSCH and the second PUSCH in each TRP.

In addition, the power control parameters of the first PUSCH and the second PUSCH may be further indicated by using DCI. Specifically, there are the following plurality of implementations.

Implementation 1: The first DCI includes an open-loop power control parameter set indication field. The first information indicates or includes a first open-loop power control parameter set and a second open-loop power control parameter set. The first open-loop power control parameter and the second open-loop power control parameter belong to the first open-loop power control parameter set and the second open-loop power control parameter set. For example, the first open-loop power control parameter belongs to the first open-loop power control parameter set, and the second open-loop power control parameter belongs to the second open-loop power control parameter set. For another example, the first open-loop power control parameter belongs to the second open-loop power control parameter set, and the second open-loop power control parameter belongs to the first open-loop power control parameter set. The open-loop power control parameter set indication field indicates a candidate value set of a terminal device-specific target received power parameter. For example, the open-loop power control parameter set indication field indicates that a candidate value set of the first terminal device-specific target received power parameter is the first open-loop power control parameter set or the second open-loop power control parameter set. For another example, the open-loop power control parameter set indication field indicates that a candidate value set of the second terminal device-specific target received power parameter is the first open-loop power control parameter set or the second open-loop power control parameter set. For another example, when the open-loop power control parameter set indication field indicates that the candidate value set of the first terminal device-specific target received power parameter is the first open-loop power control parameter set, the candidate value set of the second terminal device-specific target received power parameter is the second open-loop power control parameter set. For another example, when the open-loop power control parameter set indication field indicates that the candidate value set of the second terminal device-specific target received power parameter is the first open-loop power control parameter set, the candidate value set of the first terminal device-specific target received power parameter is the second open-loop power control parameter set. For example, the network device configures a set of PO-PUSCH-AlphaSet and a set of P0-PUSCH-Set for the terminal device, and then indicates, by using an open-loop power control parameter set indication field in the first DCI, whether a PUSCH scheduled by using the first DCI uses a value of $P_{O\_UE\_PUSCH,b,f,c}$ in PO-PUSCH-AlphaSet or in P0-PUSCH-Set. For example, if a value of the open-loop power control parameter set indication field in the first DCI is 1, the terminal device determines that a terminal device-specific target received power parameter corresponding to the first PUSCH is a 1st value in P0-PUSCH-Set. Two open-loop power control parameter sets are configured, so that power control parameters of the first PUSCH and the second PUSCH belong to different parameter sets, and different configured power control parameters may be used for the two types of PUSCHs, to ensure that open-loop power control parameters for determining the first power and the second power are different. In another possible implementation, the network device indicates a power control parameter set through signaling, and indicates, by using the DCI, that the power control parameters of the first PUSCH and the second PUSCH are two different values in the power control parameter set. For example, the first information indicates or includes a third open-loop power control parameter set, and a second indication field in the first DCI indicates a value of a terminal device-specific target received power parameter in the third open-loop power control parameter set. For another example, when the first information indicates or includes a third open-loop power control parameter set, and a second indication field in the first DCI indicates that the first terminal device-specific target received power parameter is a first value in the third open-loop power control parameter set, the second terminal device-specific target received power parameter is a second value in the third open-loop power control parameter set. Optionally, the first value is different from the second value. For another example, when the first information indicates or includes a third open-loop power control parameter set, and a second indication field in the first DCI indicates that the second terminal device-specific target received power parameter is a first value in the third open-loop power control parameter set, the first terminal device-specific target received power parameter is a second value in the third open-loop power control parameter set. Optionally, the first value is different from the second value. Different open-loop power control parameters are used, so that suitable transmit powers may be used for the first PUSCH and the second PUSCH, thereby ensuring performance.

Implementation 2: The first DCI includes an open-loop power control parameter set indication field and a first indication field. The first information indicates or includes a first open-loop power control parameter set and a second open-loop power control parameter set. The open-loop power control parameter set indication field and the first indication field indicate a candidate value set of a terminal device-specific target received power parameter. For example, the open-loop power control parameter set indication field indicates that a candidate value set of the first terminal device-specific target received power parameter is the first open-loop power control parameter set or the second open-loop power control parameter set, and the first indication field indicates that a candidate value set of the second terminal device-specific target received power parameter is the first open-loop power control parameter set or the second open-loop power control parameter set. For another example, the open-loop power control parameter set indication field indicates that a candidate value set of the first terminal device-specific target received power parameter is the first open-loop power control parameter set. For another example, the first indication field indicates that a candidate value set of the second terminal device-specific target received power parameter is the second open-loop power control parameter set. For another example, the open-loop power control parameter set indication field indicates that a candidate value set of the second terminal device-specific target received power parameter is the first open-loop power control parameter set. For another example, the first indication field indicates that a candidate value set of the first terminal device-specific target received power parameter is the second open-loop power control parameter set. Two open-loop power control parameter sets are configured, so that power control parameters of the first PUSCH and the second PUSCH belong to different parameter sets, and different configured power control parameters may be used for the two types of PUSCHs, to ensure that open-loop power control parameters for determining the first power and the second power are different. In another possible implementation, the network device indicates a power control parameter set through signaling, and indicates, by using the DCI, that the power control parameters of the first PUSCH and the second PUSCH are two different values in the power control parameter set. For example, the first information indicates or includes a third open-loop power control parameter set, and a first indication field and a second indication field in the first DCI indicate a value of a terminal device-specific target received power parameter in the third open-loop power control parameter set. For another example, the first information indicates or includes a third open-loop power control parameter set, a first indication field in the first DCI indicates that the first terminal device-specific target received power parameter is a first value in the third open-loop power control parameter set, and a second indication field indicates that the second terminal device-specific target received power parameter is a second value in the third open-loop power control parameter set. Optionally, the first value is different from the second value. For another example, the first information indicates or includes a third open-loop power control parameter set, a first indication field in the first DCI indicates that the second terminal device-specific target received power parameter is a first value in the third open-loop power control parameter set, and a second indication field indicates that the first terminal device-specific target received power parameter is a second value in the third open-loop power control parameter set. Optionally, the first value is different from the second value. Different open-loop power control parameters are used, so that suitable transmit powers may be used for the first PUSCH and the second PUSCH, thereby ensuring performance.

Implementation 3: The first DCI includes a first SRI indication field and a second SRI indication field. The terminal device determines the first terminal device-specific target received power parameter based on the first SRI indication field and a first mapping relationship, and determines the second terminal device-specific target received power parameter based on the second SRI indication field and a second mapping relationship. Correspondingly, the network device indicates the first terminal device-specific target received power parameter based on the first SRI indication field and the first mapping relationship, and indicates the second terminal device-specific target received power parameter based on the second SRI indication field and the second mapping relationship. The first mapping relationship is a mapping relationship between a value of the first SRI indication field and a candidate value of the first terminal device-specific target received power parameter, and the second mapping relationship is a mapping relationship between a value of the second SRI indication field and a candidate value of the second terminal device-specific target received power parameter. The first mapping relationship and the second mapping relationship may be predefined, or may be sent by the network device to the terminal device through signaling. For example, the network device indicates the first mapping relationship and the second mapping relationship through RRC signaling. For another example, the first information includes the first mapping relationship and the second mapping relationship. For example, the network device configures two sets of mapping relationships between SRI indication fields and PO-PUSCH-AlphaSet by using parameters sri-PUSCH-MappingToAdd-ModList and sri-PUSCH-MappingToAddModList2-r17, and then uses two SRI indication fields in the first DCI to indicate values of $P_{O\_UE\_PUSCH,b,f,c}(j)$ corresponding to the first PUSCH and the second PUSCH. In a possible implementation, the first open-loop power control parameter and the second open-loop power control parameter belong to a same open-loop power control parameter set, or belong to different open-loop power control parameter sets. For example, the first terminal device-specific target received power parameter and the second terminal device-specific target received power parameter are mapped or associated, or belong to a same open-loop power control parameter set. For details, refer to Implementation 2. Details are not described herein again.

In addition, for Implementation 3, due to the presence of the SRI indication fields, configuration of a sounding reference signal (sounding reference signal, SRS) needs to be considered. In a possible manner, the network device configures, for the terminal device, at least one SRS resource set used for a codebook-based or non-codebook-based transmission. The first SRI indication field and the second SRI indication field are associated with a same SRS resource set in the at least one SRS resource set, the first SRI indication field is used for an SRS resource indication and a power control parameter indication, and the second SRI indication field is used for a power control parameter indication. In other words, in this case, the second SRI indication field does not indicate an SRS resource. In another possible manner, the network device configures, for the terminal device, at least two SRS resource sets used for a codebook-based or non-codebook-based transmission, and the first SRI indication field and the second SRI indication field are associated with one SRS resource set of the at least two SRS resource sets or respectively associated with two SRS resource sets of the at least two SRS resource sets. In this case, both the first SRI indication field and the second SRI indication field may be used for an SRS resource indication and a power control parameter indication. In a possible manner, the SRS resource set is included in the first information or the RRC signaling.

In the foregoing implementation, the first DCI may be DCI for scheduling at least one of the first PUSCH or the second PUSCH. Alternatively, the first DCI may be common DCI or terminal device group-level DCI. The network device sends the first DCI to the terminal device. Correspondingly, the terminal device receives the first DCI. In addition, a case in which pathloss compensation coefficients of the first PUSCH and the second PUSCH are indicated by using DCI is similar to a manner of indicating the terminal device-specific target received power parameter in the foregoing implementation, the network device may configure two sets of pathloss compensation coefficients, and then dynamically indicate the first PUSCH and the second PUSCH by using one or two indication fields in the DCI. Details are not described herein again.

In a possible manner, the closed-loop power control parameter includes a power control adjustment state parameter. For example, the first closed-loop power control parameter includes a first power control adjustment state parameter. For example, the second closed-loop power control parameter includes a second power control adjustment state parameter. That a closed-loop power control parameter of the first PUSCH is different from a closed-loop power control parameter of the second PUSCH may be understood as that the first power control adjustment state parameter for determining the first power is different from the second power control adjustment state parameter for determining the second power. In this way, different closed-loop power control parameters may be used for a PUSCH transmission on the SBFD symbol and a PUSCH transmission on the non-SBFD symbol, to implement proper power control. The first power control adjustment state parameter and the second power control adjustment state parameter are predefined in a protocol, configured by using RRC, indicated by dynamic signaling, or indicated by an SRI indication field in DCI. For example, the network device configures and enables two power control adjustment state parameters through RRC signaling. For example, the RRC signaling may be *twoPUSCH-PC-AdjustmentStates.* When the network device enables two PUSCH power adjustment state parameters, the two power adjustment state parameters may be respectively associated with or used for PUSCH transmissions on the two types of symbols. For example, for an initial PUSCH transmission with a configured grant type 1, the network device may configure an association of the two PUSCH power adjustment state parameters with the first PUSCH and the second PUSCH through RRC signaling. For another example, for a PUSCH retransmission with a configured grant type 1 or PUSCH activation or retransmission with a configured grant type 2, the network device may indicate the first power control adjustment state parameter and the second power control adjustment state parameter for the first PUSCH and the second PUSCH by using the DCI. For another example, for a dynamically scheduled PUSCH, the network device may indicate the first power control adjustment state parameter and the second power control adjustment state parameter for the first PUSCH and the second PUSCH by using RRC configuration or DCI. For example, the first DCI includes the first SRI indication field and the second SRI indication field, the first SRI indication field indicates the first power control adjustment state parameter of the first PUSCH, and the second SRI indication field indicates the second power control adjustment state parameter of the second PUSCH. For example, the network device sends second DCI to the terminal device, where the second DCI includes a first transmit power control TPC command and a second TPC command, the first TPC command indicates the first power control adjustment state parameter, and the second TPC command indicates the second power control adjustment state parameter.

In the foregoing solution, two different sets of open-loop power control parameters and/or closed-loop power control parameters are respectively used for PUSCH transmissions on the SBFD symbol and on the non-SBFD symbol, so that a problem of poor transmission performance on the SBFD symbol can be resolved, and transmission performance on the SBFD symbol can be improved.

The foregoing solution describes only how to perform power control on a PUSCH in an SBFD scenario. Power control on a physical uplink control channel (physical uplink control channel, PUCCH), a physical random access channel (physical random access channel, PRACH), and an SRS in the SBFD scenario may also be implemented by using the foregoing solution. For example, two different sets of open-loop power control parameters and/or closed-loop power control parameters are respectively used for transmissions on the PUCCH, the PRACH, the SRS, the SBFD symbol, and the non-SBFD symbol. The open-loop power control parameter may further include at least one of a target received power parameter or a pathloss compensation coefficient. For another example, for the PUCCH, the network device configures, for the terminal device through RRC signaling, two sets of target received power parameters and/or pathloss compensation coefficients for PUCCH transmissions on the two types of symbols. For another example, for the PRACH, the network device may configure two target power parameters for PRACH transmissions on the two types of symbols for the terminal device through an SIB1 or RRC signaling. In a possible manner, the target power parameter herein may be $P_{\text{PRACH,target},f,c}$. In another possible implementation, power ramping parameters for PRACH transmissions on the two types of symbols are different. For example, a power ramping step for the PRACH transmission on the SBFD symbol may be greater than a power ramping step for the PRACH transmission on the non-SBFD symbol. For another example, for the SRS, the network device may configure two SRS resource sets for the terminal device for respective SRS transmissions on two types of symbols. Each SRS resource set has an independent power control parameter. The power control parameter herein includes an open-loop power control parameter and/or a closed-loop power control parameter. Details are not described herein.

To avoid excessive implementation complexity at the terminal device, a time unit is configured by the network device or predefined. When an uplink transmission is performed in the time unit, a transmit power is not adjusted, or the transmit power does not change due to different symbol types in the time unit. In a possible manner, the different symbol types herein mean that an SBFD symbol and a non-SBFD symbol are in a time unit. Different powers may be used for uplink transmissions in different time units. The time unit herein may be one slot, or at least two symbols, or is related to a configuration of an SBFD symbol. The time unit may be predefined in a protocol or indicated by the network device. In a possible manner, the network device may send signaling to enable whether the time unit takes effect. In a possible manner, the terminal device may alternatively send a support state for the time unit to the network device. In this way, the terminal device does not frequently change the transmit power due to a change of the symbol type, so as to simplify implementation by the terminal device.

Embodiments of the present invention may be used independently or in combination. Different steps in the embodiments may also be used independently or in combination. There are similar steps in different embodiments, and descriptions of the steps may be mutually referenced.

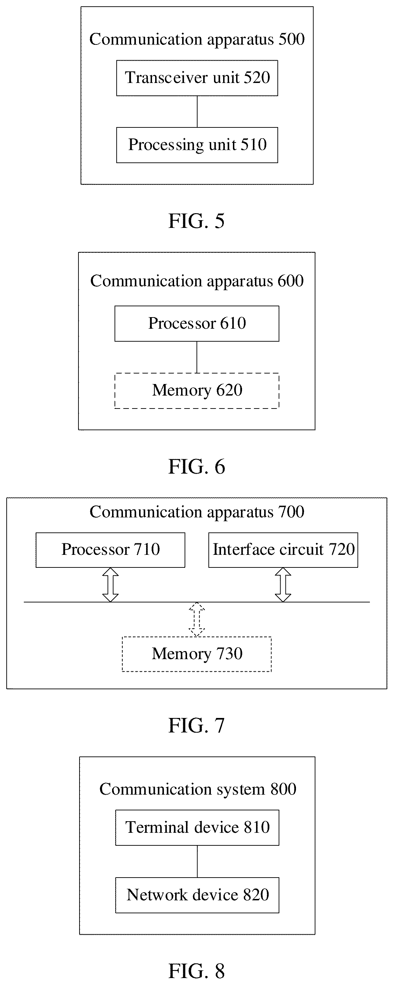

Corresponding to the foregoing methods, an embodiment of this application provides a communication device. FIG. 5 to FIG. 7 are diagrams of structures of possible communication apparatuses according to embodiments of this application. The communication apparatuses may be configured to implement functions of the terminal device or the network device in the foregoing method embodiments. Therefore, beneficial effects of the foregoing method embodiments can also be implemented. In embodiments of this application, the communication device may be the RAN node, the terminal device, the core network device, or another network device shown in FIG. 1, or may be a component (for example, a chip) in these devices.

As shown in FIG. 5, a communication apparatus 500 includes a processing unit 510 and a transceiver unit 520. The communication apparatus 500 is configured to implement the functions of the terminal device or the network device in the method embodiment shown in FIG. 4.

When the communication apparatus 500 is configured to implement the function of the terminal device in the method embodiment shown in FIG. 4, the transceiver unit 520 is configured to receive first information, where the first information indicates a first open-loop power control parameter and a second open-loop power control parameter; the processing unit 510 is configured to determine a first power and a second power based on the first information, where the first open-loop power control parameter used for determining the first power is different from the second open-loop power control parameter used for determining the second power, the first power is a transmit power of a first physical uplink shared channel PUSCH, the second power is a transmit power of a second PUSCH, a symbol occupied by the first PUSCH is a subband full duplex SBFD symbol, a symbol occupied by the second PUSCH is a non-SBFD symbol, the first open-loop power control parameter includes at least one of a first cell-specific target received power parameter, a first terminal device-specific target received power parameter, or a first pathloss compensation coefficient, and the second open-loop power control parameter includes at least one of a second cell-specific target received power parameter, a second terminal device-specific target received power parameter, or a second pathloss compensation coefficient; and the transceiver unit 520 is further configured to send the first PUSCH on a first bandwidth part BWP by using the first power, and send the second PUSCH on the first bandwidth part BWP by using the second power.

In a possible design, the first PUSCH and the second PUSCH are different parts of a same PUSCH transmission; the first PUSCH and the second PUSCH are PUSCH transmissions scheduled by different uplink scheduling grants; or the first PUSCH and the second PUSCH are different PUSCH transmissions in a repeated PUSCH transmission, or PUSCH transmissions in different slots in a PUSCH transmission across a plurality of slots, or different PUSCH transmissions in a plurality of PUSCH transmissions scheduled by a same uplink scheduling grant.

In a possible design, the first PUSCH and the second PUSCH are random access message 3 PUSCHs or random access message A PUSCHs; the first cell-specific target received power parameter includes at least one of a first preamble target received power parameter, a first message 3 target received power offset parameter, or a first message A target received power offset parameter; and the second cell-specific target received power parameter includes at least one of a second preamble target received power parameter, a second message 3 target received power offset parameter, or a second message A target received power offset parameter; and the first cell-specific target received power parameter and the second cell-specific target received power parameter satisfy at least one of the following conditions:

the first preamble target received power parameter is different from the second preamble target received power parameter;
the first message 3 target received power offset parameter is different from the second message 3 target received power offset parameter; and
the first message A target received power offset parameter is different from the second message A target received power offset parameter.

In a possible design, the first PUSCH and the second PUSCH are configured grant PUSCHs or dynamically scheduled PUSCHs; the first cell-specific target received power parameter is a cell-specific target received power parameter corresponding to a random access message 3 PUSCH or a random access message A PUSCH on an SBFD symbol; and the second cell-specific target received power parameter is a cell-specific target received power parameter corresponding to a random access message 3 PUSCH or a random access message A PUSCH on a non-SBFD symbol; and the cell-specific target received power parameter corresponding to the random access message 3 PUSCH or the random access message A PUSCH on the SBFD symbol is different from the cell-specific target received power parameter corresponding to the random access message 3 PUSCH or the random access message A PUSCH on the non-SBFD symbol.

In a possible design, the first PUSCH and the second PUSCH are the random access message 3 PUSCHs or the random access message A PUSCHs; the first terminal device-specific target received power parameter is greater than 0, and the second terminal device-specific target received power parameter is 0.

In a possible design, the first PUSCH and the second PUSCH are PUSCHs scheduled by using first downlink control information DCI, and the first DCI includes an open-loop power control parameter set indication field; the first information includes a first open-loop power control parameter set and a second open-loop power control parameter set; and when the open-loop power control parameter set indication field indicates that a candidate value set of the first terminal device-specific target received power parameter is the first open-loop power control parameter set, a candidate value set of the second terminal device-specific target received power parameter is the second open-loop power control parameter set; or when the open-loop power control parameter set indication field indicates that a candidate value set of the second terminal device-specific target received power parameter is the first open-loop power control parameter set, a candidate value set of the first terminal device-specific target received power parameter is the second open-loop power control parameter set.

In a possible design, the first PUSCH and the second PUSCH are PUSCHs scheduled by using first DCI, and the first DCI includes an open-loop power control parameter set indication field and a first indication field; the first information includes a first open-loop power control parameter set and a second open-loop power control parameter set; and the open-loop power control parameter set indication field indicates that a candidate value set of the first terminal device-specific target received power parameter is the first open-loop power control parameter set, and the first indication field indicates that a candidate value set of the second terminal device-specific target received power parameter is the second open-loop power control parameter set; or the open-loop power control parameter set indication field indicates that a candidate value set of the second terminal device-specific target received power parameter is the first open-loop power control parameter set, and the first indication field indicates that a candidate value set of the first terminal device-specific target received power parameter is the second open-loop power control parameter set.

In a possible design, the first PUSCH and the second PUSCH are PUSCHs scheduled by using first downlink control information DCI, and the first DCI includes a first sounding reference signal resource indicator SRI indication field and a second SRI indication field; and the processing unit 510 is further configured to determine the first terminal device-specific target received power parameter based on the first SRI indication field and a first mapping relationship, and determine the second terminal device-specific target received power parameter based on the second SRI indication field and a second mapping relationship, where the first mapping relationship is a mapping relationship between a value of the first SRI indication field and a candidate value of the first terminal device-specific target received power parameter, and the second mapping relationship is a mapping relationship between a value of the second SRI indication field and a candidate value of the second terminal device-specific target received power parameter.

In a possible design, a first power control adjustment state parameter for determining the first power is different from a second power control adjustment state parameter for determining the second power.

In a possible design, the first power control adjustment state parameter and the second power control adjustment state parameter are predefined in a protocol, indicated by radio resource control RRC, indicated by dynamic signaling, or indicated by an SRI indication field in DCI.

In a possible design, the transceiver unit 520 is further configured to receive second DCI, where the second DCI includes a first transmit power control TPC command and a second TPC command, the first TPC command indicates the first power control adjustment state parameter, and the second TPC command indicates the second power control adjustment state parameter.

In a possible design, the processing unit 510 is configured to control or indicate the transceiver unit 520 to perform receiving, and to control or indicate the transceiver unit 520 to perform sending.

When the communication apparatus 500 is configured to implement the function of the network device in the method embodiment shown in FIG. 4, the transceiver unit 520 is configured to send first information, where the first information indicates a first open-loop power control parameter and a second open-loop power control parameter, the first open-loop power control parameter used for determining a first power is different from the second open-loop power control parameter used for determining a second power, the first power is a transmit power of a first physical uplink shared channel PUSCH, the second power is a transmit power of a second PUSCH, a symbol occupied by the first PUSCH is a subband full duplex SBFD symbol, a symbol occupied by the second PUSCH is a non-SBFD symbol, the first open-loop power control parameter includes at least one of a first cell-specific target received power parameter, a first terminal device-specific target received power parameter, or a first pathloss compensation coefficient, and the second open-loop power control parameter includes at least one of a second cell-specific target received power parameter, a second terminal device-specific target received power parameter, or a second pathloss compensation coefficient; and the transceiver unit 520 is further configured to receive the first PUSCH on a first BWP, and receive the second PUSCH on the first BWP.

In a possible design, the processing unit 510 is configured to determine the first information based on a requirement of the terminal device for the first power and the second power.

In a possible design, the first PUSCH and the second PUSCH are different parts of a same PUSCH transmission; the first PUSCH and the second PUSCH are PUSCH transmissions scheduled by different uplink scheduling grants; or the first PUSCH and the second PUSCH are different PUSCH transmissions in a repeated PUSCH transmission, or PUSCH transmissions in different slots in a PUSCH transmission across a plurality of slots, or different PUSCH transmissions in a plurality of PUSCH transmissions scheduled by a same uplink scheduling grant.

In a possible design, the first PUSCH and the second PUSCH are random access message 3 PUSCHs or random access message A PUSCHs; the first cell-specific target received power parameter includes at least one of a first preamble target received power parameter, a first message 3 target received power offset parameter, or a first message A target received power offset parameter; and the second cell-specific target received power parameter includes at least one of a second preamble target received power parameter, a second message 3 target received power offset parameter, or a second message A target received power offset parameter; and the first cell-specific target received power parameter and the second cell-specific target received power parameter satisfy at least one of the following conditions:

the first preamble target received power parameter is different from the second preamble target received power parameter;
the first message 3 target received power offset parameter is different from the second message 3 target received power offset parameter; and
the first message A target received power offset parameter is different from the second message A target received power offset parameter.

In a possible design, the first PUSCH and the second PUSCH are configured grant PUSCHs or dynamically scheduled PUSCHs; the first cell-specific target received power parameter is a cell-specific target received power parameter corresponding to a random access message 3 PUSCH or a random access message A PUSCH on an SBFD symbol; and the second cell-specific target received power parameter is a cell-specific target received power parameter corresponding to a random access message 3 PUSCH or a random access message A PUSCH on a non-SBFD symbol; and the cell-specific target received power parameter corresponding to the random access message 3 PUSCH or the random access message A PUSCH on the SBFD symbol is different from the cell-specific target received power parameter corresponding to the random access message 3 PUSCH or the random access message A PUSCH on the non-SBFD symbol.

In a possible design, the first PUSCH and the second PUSCH are the random access message 3 PUSCHs or the random access message A PUSCHs; the first terminal device-specific target received power parameter is greater than 0, and the second terminal device-specific target received power parameter is 0.

In a possible design, the first PUSCH and the second PUSCH are PUSCHs scheduled by using first downlink control information DCI, and the first DCI includes an open-loop power control parameter set indication field; the first information includes a first open-loop power control parameter set and a second open-loop power control parameter set; and when the open-loop power control parameter set indication field indicates that a candidate value set of the first terminal device-specific target received power parameter is the first open-loop power control parameter set, a candidate value set of the second terminal device-specific target received power parameter is the second open-loop power control parameter set; or when the open-loop power control parameter set indication field indicates that a candidate value set of the second terminal device-specific target received power parameter is the first open-loop power control parameter set, a candidate value set of the first terminal device-specific target received power parameter is the second open-loop power control parameter set.

In a possible design, the first PUSCH and the second PUSCH are PUSCHs scheduled by using first DCI, and the first DCI includes an open-loop power control parameter set indication field and a first indication field; the first information includes a first open-loop power control parameter set and a second open-loop power control parameter set; and the open-loop power control parameter set indication field indicates that a candidate value set of the first terminal device-specific target received power parameter is the first open-loop power control parameter set, and the first indication field indicates that a candidate value set of the second terminal device-specific target received power parameter is the second open-loop power control parameter set; or the open-loop power control parameter set indication field indicates that a candidate value set of the second terminal device-specific target received power parameter is the first open-loop power control parameter set, and the first indication field indicates that a candidate value set of the first terminal device-specific target received power parameter is the second open-loop power control parameter set.

In a possible design, the first PUSCH and the second PUSCH are PUSCHs scheduled by using first downlink control information DCI, and the first DCI includes a first sounding reference signal resource indicator SRI indication field and a second SRI indication field; and the first SRI indication field and a first mapping relationship indicate the first terminal device-specific target received power parameter, and the second SRI indication field and a second mapping relationship indicate the second terminal device-specific target received power parameter, where the first mapping relationship is a mapping relationship between a value of the first SRI indication field and a candidate value of the first terminal device-specific target received power parameter, and the second mapping relationship is a mapping relationship between a value of the second SRI indication field and a candidate value of the second terminal device-specific target received power parameter.

In a possible design, a first power control adjustment state parameter for determining the first power is different from a second power control adjustment state parameter for determining the second power.

In a possible design, the first power control adjustment state parameter and the second power control adjustment state parameter are predefined in a protocol, indicated by radio resource control RRC, indicated by dynamic signaling, or indicated by an SRI indication field in DCI.

In a possible design, the transceiver unit 520 is further configured to send second DCI, where the second DCI includes a first transmit power control TPC command and a second TPC command, the first TPC command indicates the first power control adjustment state parameter, and the second TPC command indicates the second power control adjustment state parameter.

In a possible design, the processing unit 510 is configured to control or indicate the transceiver unit 520 to perform receiving, and to control or indicate the transceiver unit 520 to perform sending.

An embodiment of this application provides a communication apparatus 600. FIG. 6 is a block diagram of another communication apparatus according to an embodiment of this application. The communication apparatus 600 includes a processor 610, and the processor 610 may perform the method in any possible implementation in embodiments of this application. Optionally, the communication apparatus 600 may further include at least one memory 620. The processor 610 is coupled to the at least one memory 620. The processor 610 is configured to read a computer program stored in the at least one memory 620, to perform the method in any possible implementation in embodiments of this application.

An embodiment of this application further provides a communication apparatus 700. As shown in FIG. 7, the communication apparatus 700 includes a processor 710 and an interface circuit 720. The processor 710 and the interface circuit 720 are coupled to each other. It may be understood that the interface circuit 720 may be a transceiver or an input/output interface. Optionally, the communication apparatus 700 may further include a memory 730, configured to store instructions executed by the processor 710, input data required by the processor 710 to run instructions, or data generated after the processor 710 runs instructions.

When the communication apparatus 700 is configured to implement the method shown in FIG. 4, the processor 710 is configured to implement a function of the processing unit 510, and the interface circuit 720 is configured to implement a function of the transceiver unit 520.

When the communication apparatus is a chip used in a terminal device, the chip in the terminal device implements a function of the terminal device in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication apparatus is a chip used in a network device, the chip in the network device implements a function of the network device in the foregoing method embodiments. The chip in the network device receives information from another module (for example, a radio frequency module or an antenna) in the network device, where the information is sent by a terminal device to the network device. Alternatively, the chip in the network device sends information to another module (for example, a radio frequency module or an antenna) in the network device, where the information is sent by the network device to a terminal device.

The processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The methods, the steps, and the logical block diagrams that are disclosed in embodiments of this application may be implemented or performed. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

The memory in embodiments of this application may be a volatile memory or a non-volatile memory, or may include both the volatile memory and the non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through illustrative but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM).

An embodiment of this application provides a communication system 800, including a terminal device 810 and a network device 820 in the communication method provided in embodiments of this application. FIG. 8 is a block diagram of a communication system 800 according to an embodiment of this application.

The method steps in embodiments of this application may be implemented in a hardware manner, or may be implemented in a manner of executing software instructions by a processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be in a network device or a terminal device. Certainly, the processor and the storage medium may alternatively exist as discrete components in a network device or a terminal device.

All or some of the foregoing embodiments may be implemented by using software, hardware, firmware, or any combination thereof. When software is used for implementing the embodiments, all or some of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

It may be understood that, in embodiments of this application, sequence numbers of the foregoing processes do not mean execution sequences. The execution sequences of the processes should be determined based on functions and internal logic of the processes, and should not constitute any limitation on implementation processes of embodiments of this application.

It should be understood that, in this application, "when" and "if" mean that an apparatus performs corresponding processing in an objective situation, and are not intended to limit time. The terms do not mean that the apparatus is required to have a determining action during implementation, and do not mean any other limitation.

A person skilled in the art may understand that various numbers such as first and second in this application are merely used for differentiation for ease of description, and are not intended to limit the scope of embodiments of this application. A specific value of a number (which may also be referred to as an index), a specific value of a quantity, and a position in this application are merely used as examples, but are not unique representation forms, and are not intended to limit the scope of embodiments of this application. Various numbers such as first and second in this application are merely used for differentiation for ease of description, and are not intended to limit the scope of embodiments of this application.

In addition, the term "and/or" in this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects. The term "at least one" in this application may represent "one" and "two or more". For example, at least one of A, B, and C may indicate the following seven cases: Only A exists, only B exists, only C exists, both A and B exist, both A and C exist, both C and B exist, and A, B, and C exist.

In embodiments of this application, "indication" may include a direct indication and an indirect indication, or may include an explicit indication and an implicit indication. Information indicated by a piece of information (which may be referred to as indication information) is referred to as to-be-indicated information. In a specific implementation process, the to-be-indicated information may be indicated in a plurality of manners. For example, but not limited to, the to-be-indicated information, such as the to-be-indicated information or an index of the to-be-indicated information, may be directly indicated. Alternatively, the to-be-indicated information may be indirectly indicated by indicating other information. There is an association relationship between the other information and the to-be-indicated information. Alternatively, only a part of the to-be-indicated information may be indicated, and the remaining part of the to-be-indicated information is known or pre-agreed on. For example, specific information may be indicated by using an arrangement sequence of pieces of information that are pre-agreed on (for example, predefined in a protocol), to reduce indication overheads to some extent. A specific indication manner is not limited in this application. It may be understood that, for a sender of the indication information, the indication information may indicate to-be-indicated information, and for a receiver of the indication information, the indication information may be used for determining to-be-indicated information.

It may be clearly understood by a person skilled in the art that, for the purpose of convenient and brief description, for detailed working processes of the foregoing system, apparatus, and unit, refer to corresponding processes in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separate, and components displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

## Claims

1. A communication method, comprising:

   receiving first information, wherein the first information indicates a first open-loop power control parameter and a second open-loop power control parameter;
   determining a first power and a second power based on the first information, wherein the first open-loop power control parameter used for determining the first power is different from the second open-loop power control parameter used for determining the second power, the first power is a transmit power of the first physical uplink shared channel PUSCH, the second power is a transmit power of the second PUSCH, a symbol occupied by the first PUSCH is a subband full duplex SBFD symbol, a symbol occupied by the second PUSCH is a non-SBFD symbol, the first open-loop power control parameter comprises at least one of a first cell-specific target received power parameter, a first terminal device-specific target received power parameter, or a first pathloss compensation coefficient, and the second open-loop power control parameter comprises at least one of a second cell-specific target received power parameter, a second terminal device-specific target received power parameter, or a second pathloss compensation coefficient; and
   sending the first PUSCH on a first bandwidth part BWP by using the first power, and sending the second PUSCH on the first bandwidth part BWP by using the second power.

**2.** The method according to claim 1, wherein

the first PUSCH and the second PUSCH are different parts of a same PUSCH transmission;
the first PUSCH and the second PUSCH are PUSCH transmissions scheduled by different uplink scheduling grants; or
the first PUSCH and the second PUSCH are different PUSCH transmissions in a repeated PUSCH transmission, or PUSCH transmissions in different slots in a PUSCH transmission across a plurality of slots, or different PUSCH transmissions in a plurality of PUSCH transmissions scheduled by a same uplink scheduling grant.

**3.** The method according to claim 1 or 2, wherein

the first PUSCH and the second PUSCH are random access message 3 PUSCHs or random access message A PUSCHs;
the first cell-specific target received power parameter comprises at least one of a first preamble target received power parameter, a first message 3 target received power offset parameter, or a first message A target received power offset parameter; and the second cell-specific target received power parameter comprises at least one of a second preamble target received power parameter, a second message 3 target received power offset parameter, or a second message A target received power offset parameter; and
the first cell-specific target received power parameter and the second cell-specific target received power parameter satisfy at least one of the following conditions:

the first preamble target received power parameter is different from the second preamble target received power parameter;
the first message 3 target received power offset parameter is different from the second message 3 target received power offset parameter; and
the first message A target received power offset parameter is different from the second message A target received power offset parameter.

**4.** The method according to claim 1 or 2, wherein

the first PUSCH and the second PUSCH are configured grant PUSCHs or dynamically scheduled PUSCHs;
the first cell-specific target received power parameter is a cell-specific target received power parameter corresponding to a random access message 3 PUSCH or a random access message A PUSCH on the SBFD symbol; and the second cell-specific target received power parameter is a cell-specific target received power parameter corresponding to a random access message 3 PUSCH or a random access message A PUSCH on the non-SBFD symbol; and
the cell-specific target received power parameter corresponding to the random access message 3 PUSCH or the random access message A PUSCH on the SBFD symbol is different from the cell-specific target received power parameter corresponding to the random access message 3 PUSCH or the random access message A PUSCH on the non-SBFD symbol.

**5.** The method according to any one of claims 1 to 3, wherein
the first PUSCH and the second PUSCH are random access message 3 PUSCHs or random access message A PUSCHs, the first terminal device-specific target received power parameter is greater than 0, and the second terminal device-specific target received power parameter is 0.

**6.** The method according to claim 1, 2, or 4, wherein

the first PUSCH and the second PUSCH are PUSCHs scheduled by using first downlink control information DCI, and the first DCI comprises an open-loop power control parameter set indication field; and
that the first information indicates the first open-loop power control parameter and the second open-loop power control parameter comprises:

the first information indicates a first open-loop power control parameter set and a second open-loop power control parameter set, and the first open-loop power control parameter and the second open-loop power control parameter belong to the first open-loop power control parameter set and the second open-loop power control parameter set; and
when the open-loop power control parameter set indication field indicates that a candidate value set of the first terminal device-specific target received power parameter is the first open-loop power control parameter set, a candidate value set of the second terminal device-specific target received power parameter is the second open-loop power control parameter set; or

when the open-loop power control parameter set indication field indicates that a candidate value set of the second terminal device-specific target received power parameter is the first open-loop power control parameter set, a candidate value set of the first terminal device-specific target received power parameter is the second open-loop power control parameter set.

7. The method according to claim 1, 2, or 4, wherein

the first PUSCH and the second PUSCH are PUSCHs scheduled by using first DCI, and the first DCI comprises an open-loop power control parameter set indication field and a first indication field; and

that the first information indicates the first open-loop power control parameter and the second open-loop power control parameter comprises:

the first information indicates a first open-loop power control parameter set and a second open-loop power control parameter set, and the first open-loop power control parameter and the second open-loop power control parameter belong to the first open-loop power control parameter set and the second open-loop power control parameter set; and

the open-loop power control parameter set indication field indicates that a candidate value set of the first terminal device-specific target received power parameter is the first open-loop power control parameter set, and the first indication field indicates that a candidate value set of the second terminal device-specific target received power parameter is the second open-loop power control parameter set; or

the open-loop power control parameter set indication field indicates that a candidate value set of the second terminal device-specific target received power parameter is the first open-loop power control parameter set, and the first indication field indicates that a candidate value set of the first terminal device-specific target received power parameter is the second open-loop power control parameter set.

8. The method according to claim 1, 2, or 4, wherein

the first PUSCH and the second PUSCH are PUSCHs scheduled by using first downlink control information DCI, and the first DCI comprises a first sounding reference signal resource indicator SRI indication field and a second SRI indication field; and

the first terminal device-specific target received power parameter is determined based on the first SRI indication field and a first mapping relationship, and the second terminal device-specific target received power parameter is determined based on the second SRI indication field and a second mapping relationship, wherein the first mapping relationship is a mapping relationship between a value of the first SRI indication field and a candidate value of the first terminal device-specific target received power parameter, and the second mapping relationship is a mapping relationship between a value of the second SRI indication field and a candidate value of the second terminal device-specific target received power parameter.

9. The method according to any one of claims 1 to 8, wherein
a first power control adjustment state parameter for determining the first power is different from a second power control adjustment state parameter for determining the second power.

10. The method according to claim 9, wherein
the first power control adjustment state parameter and the second power control adjustment state parameter are predefined in a protocol, indicated by radio resource control RRC, indicated by dynamic signaling, or indicated by an SRI indication field in DCI.

11. The method according to claim 9, comprising
receiving second DCI, wherein the second DCI comprises a first transmit power control TPC command and a second TPC command, the first TPC command indicates the first power control adjustment state parameter, and the second TPC command indicates the second power control adjustment state parameter.

12. A communication method, comprising:

sending first information, wherein the first information indicates a first open-loop power control parameter and a second open-loop power control parameter, wherein
the first open-loop power control parameter used for determining the first power is different from the second open-loop power control parameter used for determining the second power, the first power is a transmit power of the first physical uplink shared channel PUSCH, the second power is a transmit power of the second PUSCH, a symbol occupied by the first PUSCH is a subband full duplex SBFD symbol, a symbol occupied by the second PUSCH is a non-SBFD symbol, the first open-loop power control parameter comprises at least one of a first cell-specific target received power parameter, a first terminal device-specific target received power parameter, or a first pathloss compensation coefficient, and the second open-loop power control parameter comprises at least one of a second cell-specific target received power parameter, a second terminal device-specific target received power parameter, or a second pathloss compensation coefficient; and receiving the first PUSCH on a first BWP, and receiving the second PUSCH on the first BWP.

13. The method according to claim 12, wherein

the first PUSCH and the second PUSCH are different parts of a same PUSCH transmission;
the first PUSCH and the second PUSCH are PUSCH transmissions scheduled by different uplink scheduling grants; or
the first PUSCH and the second PUSCH are different PUSCH transmissions in a repeated PUSCH transmission, or PUSCH transmissions in different slots in a PUSCH transmission across a plurality of slots, or different PUSCH transmissions in a plurality of PUSCH transmissions scheduled by a same uplink scheduling grant.

14. The method according to claim 12 or 13, wherein

the first PUSCH and the second PUSCH are random access message 3 PUSCHs or random access message A PUSCHs;
the first cell-specific target received power parameter comprises at least one of a first preamble target received power parameter, a first message 3 target received power offset parameter, or a first message A target received power offset parameter; and the second cell-specific target received power parameter comprises at least one of a second preamble target received power parameter, a second message 3 target received power offset parameter, or a second message A target received power offset parameter; and
the first cell-specific target received power parameter and the second cell-specific target received power parameter satisfy at least one of the following conditions:

the first preamble target received power parameter is different from the second preamble target received power parameter;
the first message 3 target received power offset parameter is different from the second message 3 target received power offset parameter; and
the first message A target received power offset parameter is different from the second message A target received power offset parameter.

15. The method according to claim 12 or 13, wherein

the first PUSCH and the second PUSCH are configured grant PUSCHs or dynamically scheduled PUSCHs;
the first cell-specific target received power parameter is a cell-specific target received power parameter corresponding to a random access message 3 PUSCH or a random access message A PUSCH on the SBFD symbol; and the second cell-specific target received power parameter is a cell-specific target received power parameter corresponding to a random access message 3 PUSCH or a random access message A PUSCH on the non-SBFD symbol; and
the cell-specific target received power parameter corresponding to the random access message 3 PUSCH or the random access message A PUSCH on the SBFD symbol is different from the cell-specific target received power parameter corresponding to the random access message 3 PUSCH or the random access message A PUSCH on the non-SBFD symbol.

16. The method according to any one of claims 12 to 14, wherein
the first PUSCH and the second PUSCH are the random access message 3 PUSCHs or the random access message A PUSCHs, the first terminal device-specific target received power parameter is greater than 0, and the second terminal device-specific target received power parameter is 0.

**17.** The method according to claim 12, 13, or 15, wherein

the first PUSCH and the second PUSCH are PUSCHs scheduled by using first downlink control information DCI, and the first DCI comprises an open-loop power control parameter set indication field; and
that the first information indicates the first open-loop power control parameter and the second open-loop power control parameter comprises:

the first information indicates a first open-loop power control parameter set and a second open-loop power control parameter set, and the first open-loop power control parameter and the second open-loop power control parameter belong to the first open-loop power control parameter set and the second open-loop power control parameter set; and when the open-loop power control parameter set indication field indicates that a candidate value set of the first terminal device-specific target received power parameter is the first open-loop power control parameter set, a candidate value set of the second terminal device-specific target received power parameter is the second open-loop power control parameter set; or
when the open-loop power control parameter set indication field indicates that a candidate value set of the second terminal device-specific target received power parameter is the first open-loop power control parameter set, a candidate value set of the first terminal device-specific target received power parameter is the second open-loop power control parameter set.

**18.** The method according to claim 12, 13, or 15, wherein

the first PUSCH and the second PUSCH are PUSCHs scheduled by using first DCI, and the first DCI comprises an open-loop power control parameter set indication field and a first indication field; and
that the first information indicates the first open-loop power control parameter and the second open-loop power control parameter comprises:

the first information indicates a first open-loop power control parameter set and a second open-loop power control parameter set, and the first open-loop power control parameter and the second open-loop power control parameter belong to the first open-loop power control parameter set and the second open-loop power control parameter set; and
the open-loop power control parameter set indication field indicates that a candidate value set of the first terminal device-specific target received power parameter is the first open-loop power control parameter set, and the first indication field indicates that a candidate value set of the second terminal device-specific target received power parameter is the second open-loop power control parameter set; or
the open-loop power control parameter set indication field indicates that a candidate value set of the second terminal device-specific target received power parameter is the first open-loop power control parameter set, and the first indication field indicates that a candidate value set of the first terminal device-specific target received power parameter is the second open-loop power control parameter set.

**19.** The method according to claim 12, 13, or 15, wherein

the first PUSCH and the second PUSCH are PUSCHs scheduled by using first downlink control information DCI, and the first DCI comprises a first SRI indication field and a second SRI indication field; and
the first SRI indication field and a first mapping relationship indicate the first terminal device-specific target received power parameter, and the second SRI indication field and a second mapping relationship indicate the second terminal device-specific target received power parameter, wherein the first mapping relationship is a mapping relationship between a value of the first SRI indication field and a candidate value of the first terminal device-specific target received power parameter, and the second mapping relationship is a mapping relationship between a value of the second SRI indication field and a candidate value of the second terminal device-specific target received power parameter.

**20.** The method according to any one of claims 12 to 19, wherein
a first power control adjustment state parameter for determining the first power is different from a second power control adjustment state parameter for determining the second power.

**21.** The method according to claim 20, wherein
the first power control adjustment state parameter and the second power control adjustment state parameter are predefined in a protocol, indicated by radio resource control RRC, indicated by dynamic signaling, or indicated by an SRI indication field in DCI.

22. The method according to claim 20, comprising:
sending second DCI, wherein the second DCI comprises a first TPC command and a second TPC command, the first TPC command indicates the first power control adjustment state parameter, and the second TPC command indicates the second power control adjustment state parameter.

23. A terminal device, comprising a processor, wherein the processor is configured to perform the method according to any one of claims 1 to 11.

24. A network device, comprising a processor, wherein the processor is configured to perform the method according to any one of claims 12 to 22.

25. A communication apparatus, comprising at least one processor and an interface circuit, wherein the interface circuit is configured to provide an input or an output of instructions and/or data for the at least one processor; and when the at least one processor executes the instructions, the apparatus is enabled to implement the method according to any one of claims 1 to 22.

26. A computer-readable storage medium, comprising instructions, wherein when the instructions are run on a computer, the computer is enabled to perform the method according to any one of claims 1 to 11, or the computer is enabled to perform the method according to any one of claims 12 to 22.

27. A computer program product, comprising instructions, wherein when the instructions are run on a computer, the computer is enabled to perform the method according to any one of claims 1 to 11, or the computer is enabled to perform the method according to any one of claims 12 to 22.

28. A chip, comprising a processor and a communication interface, wherein the processor is configured to read instructions or a computer program, to perform the method according to any one of claims 1 to 11, or enable the computer to perform the method according to any one of claims 12 to 22.

29. A communication system, comprising the terminal device according to claim 23 and the network device according to claim 24.

FIG. 1

EP 4 708 983 A1

FIG. 2

FIG. 3

FIG. 4

Communication apparatus 500

Transceiver unit 520

Processing unit 510

FIG. 5

Communication apparatus 600

Processor 610

Memory 620

FIG. 6

Communication apparatus 700

Processor 710

Interface circuit 720

Memory 730

FIG. 7

Communication system 800

Terminal device 810

Network device 820

FIG. 8

## INTERNATIONAL SEARCH REPORT

| International application No. |
| --- |
| **PCT/CN2024/091457** |

**A. CLASSIFICATION OF SUBJECT MATTER**

H04W52/10(2009.01)i

According to International Patent Classification (IPC) or to both national classification and IPC

**B. FIELDS SEARCHED**

Minimum documentation searched (classification system followed by classification symbols)

IPC:H04W,H04L,H04Q

Documentation searched other than minimum documentation to the extent that such documents are included in the fields searched

Electronic data base consulted during the international search (name of data base and, where practicable, search terms used)

CNTXT; WPABS; WPABSC; ENTXT; ENTXTC; CJFD; CNKI; 3GPP: 功率控制参数, 功控参数, 子带全双工, 全双工, 开环, 功率, power, power control parameter, OLPC, open-loop, open loop, SBFD, subband fullduplex, full dulpex

**C. DOCUMENTS CONSIDERED TO BE RELEVANT**

| Category* | Citation of document, with indication, where appropriate, of the relevant passages | Relevant to claim No. |
| --- | --- | --- |
| X | CN 110248402 A (HUAWEI TECHNOLOGIES CO., LTD.) 17 September 2019 (2019-09-17) description, paragraphs [0046]-[0176] | 1-29 |
| A | CN 110476461 A (GUANGDONG OPPO MOBILE COMMUNICATIONS CO., LTD.) 19 November 2019 (2019-11-19) entire document | 1-29 |
| A | CN 115702587 A (QUALCOMM INC.) 14 February 2023 (2023-02-14) entire document | 1-29 |
| A | WO 2020092985 A1 (INTEL CORP.) 07 May 2020 (2020-05-07) entire document | 1-29 |

☐ Further documents are listed in the continuation of Box C. ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **05 August 2024** | **06 August 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/091457**

| Patent document cited in search report | | | Publication date (day/month/year) | Patent family member(s) | | | Publication date (day/month/year) |
|---|---|---|---|---|---|---|---|
| CN | 110248402 | A | 17 September 2019 | WO | 2019170106 | A1 | 12 September 2019 |
| | | | | EP | 3739970 | A1 | 18 November 2020 |
| | | | | EP | 3739970 | A4 | 24 February 2021 |
| | | | | EP | 3739970 | B1 | 24 May 2023 |
| | | | | US | 2020374807 | A1 | 26 November 2020 |
| | | | | US | 11297577 | B2 | 05 April 2022 |
| CN | 110476461 | A | 19 November 2019 | AU | 2018403275 | A1 | 03 October 2019 |
| | | | | US | 2019364511 | A1 | 28 November 2019 |
| | | | | US | 10939383 | B2 | 02 March 2021 |
| | | | | JP | 2021515994 | A | 24 June 2021 |
| | | | | JP | 7348068 | B2 | 20 September 2023 |
| | | | | ZA | 201906012 | B | 30 November 2022 |
| | | | | RU | 2748616 | C1 | 28 May 2021 |
| | | | | DK | 3570598 | T3 | 10 May 2021 |
| | | | | JP | 2023025128 | A | 21 February 2023 |
| | | | | SG | 11201908352 | SA | 30 October 2019 |
| | | | | IL | 269195 | B | 01 April 2022 |
| | | | | CA | 3055624 | A1 | 25 July 2019 |
| | | | | CA | 3055624 | C | 23 August 2022 |
| | | | | WO | 2019140665 | A1 | 25 July 2019 |
| | | | | KR | 20200109237 | A | 22 September 2020 |
| | | | | KR | 102380345 | B1 | 29 March 2022 |
| | | | | ES | 2870155 | T3 | 26 October 2021 |
| | | | | EP | 3570598 | A1 | 20 November 2019 |
| | | | | EP | 3570598 | A4 | 11 March 2020 |
| | | | | EP | 3570598 | B1 | 07 April 2021 |
| | | | | US | 2021153133 | A1 | 20 May 2021 |
| | | | | US | 11368914 | B2 | 21 June 2022 |
| | | | | PH | 12019502081 | A1 | 14 September 2020 |
| | | | | MX | 2019013366 | A | 13 January 2020 |
| | | | | EP | 3826374 | A1 | 26 May 2021 |
| | | | | BR | 112019021143 | A2 | 12 May 2020 |
| CN | 115702587 | A | 14 February 2023 | US | 2021392674 | A1 | 16 December 2021 |
| | | | | US | 11711819 | B2 | 25 July 2023 |
| | | | | EP | 4165913 | A1 | 19 April 2023 |
| | | | | WO | 2021253047 | A1 | 16 December 2021 |
| | | | | US | 2023337251 | A1 | 19 October 2023 |
| WO | 2020092985 | A1 | 07 May 2020 | EP | 3874837 | A1 | 08 September 2021 |
| | | | | EP | 3874837 | A4 | 03 August 2022 |

Form PCT/ISA/210 (patent family annex) (July 2022)

**EP 4 708 983 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310541448